Europäisches Patentamt

(19) European Patent Office

Office européen des brevets

(11) **EP 0 597 461 B1**

(12) **EUROPEAN PATENT SPECIFICATION**

(45) Date of publication and mention
of the grant of the patent:
**28.05.1997 Bulletin 1997/22**

(51) Int. Cl.$^6$: **C08F 2/34**, C08F 210/16,
C08J 5/18, C08L 23/04

(21) Application number: **93118221.6**

(22) Date of filing: **10.11.1993**

(54) **Gas-phase process for producing copolymers of propylene and ethylene and polyolefin films made therefrom**

Verfahren für die Copolymerisation von Ethylen und Propylen in der Gasphase und aus diese Copolymeren hergestellte Filmen

Procédé de copolymérisation de propylène et d'éthylène en phase gazeuse et films fabriqués à partir de ces copolymères

(84) Designated Contracting States:
**BE DE GB IT NL**

(30) Priority: **12.11.1992 US 975487**
**12.11.1992 US 975488**
**12.11.1992 US 975485**

(43) Date of publication of application:
**18.05.1994 Bulletin 1994/20**

(73) Proprietor: **QUANTUM CHEMICAL CORPORATION**
**Cincinnati, OH 45249 (US)**

(72) Inventors:
• **Klimek, Thaddeus W.**
**Orland Park, Illinois 60462 (US)**
• **Edwards, Michael B.**
**Minooka, Illinois 60447 (US)**

• **Johnson, Lisa K.**
**Mason, Ohio 45040 (US)**
• **Buehler, Charles K.**
**Cincinnati, Ohio 45241 (US)**
• **Bowen, Paul E.**
**Loveland, Ohio 45140 (US)**

(74) Representative: **Grünecker, Kinkeldey, Stockmair & Schwanhäusser Anwaltssozietät**
**Maximilianstrasse 58**
**80538 München (DE)**

(56) References cited:
**EP-A- 0 050 013          EP-A- 0 074 194**
**EP-A- 0 276 734          DE-A- 4 000 224**
**US-A- 4 863 769**

**Description**

The present invention relates to an improved gas-phase copolymerization process for producing copolymers of propylene and ethylene in multiple reactors using high activity Ti/Al catalyst systems whereby polymerization conditions are controlled through the use of control parameters. The present invention further relates to using a modification of said process for producing in-situ thermoplastic polyolefins. By monitoring the product produced, ethylene feeds to the reactors and other process conditions are controlled and maintained within a specified range to produce products having improved properties.

The present invention further relates to polyolefin films having high melting points combined with improved flexibility, high puncture and tear resistance, and good contact clarity. The monolayer or multilayer films are produced using extrusion methods, either blown film extrusion, cast film extrusion, or lamination, and comprise a polyolefin which is a copolymer of propylene and ethylene.

Polyolefins are widely used for the production of films. These films can be produced by either blown extrusion or by slot-die extrusion with subsequent cooling using a chill roll or water bath and a variety of products with a range of properties are available.

The high melt point and highly crystalline structure of polypropylene make it well suited for applications where stiffer and strong films are required. The narrow melting range and high rate of crystallization do, however, create processing problems. To some extent these processing difficulties have been overcome by blending or by copolymerization but not without compromising optical properties, tensile strength, and other important film characteristics.

In a discussion of propylene polymers, W. Schoene in his article entitled "PP Specialty Film Products for Film Applications" (Specialty Plastics Conference 89, Zurich, 1989) divided propylene polymers into four classes - highly crystalline homopolymers, homopolymers with reduced crystallinity, random copolymers and impact copolymers. From the general properties listed by Schoene for the two copolymer types, it is apparent that clarity and stiffness are sacrificed in order to improve in the low temperature impact resistance.

Resins in the polyethylene homopolymer and copolymer families provide a broad spectrum of film products with their good optics, heat seal and processability. While these films are well suited for many uses, the low melting point of the resins precludes their use in certain applications.

It would be advantageous if polymers suitable for films were available which combine the advantages of both polypropylene and polyethylene resulting in films that display good contact clarity, sealing characteristics and softness with high impact and tear resistance. It would be even more desirable if these products had melting points substantially higher than that of low density polyethylene (LDPE) and preferably as high or higher than high density polyethylene (HDPE).

These and other advantages are achieved with the products of the instant invention which are described below and which are obtained by the copolymerization process also described below.

A class of polypropylene which has enjoyed significant growth is propylene impact copolymer. These are two-phase materials consisting of a continuous phase of highly isotactic polypropylene and a dispersed phase of rubber-like ethylene-propylene copolymer. While these products can be produced by melt compounding, existing multi-reactor technology makes it possible to directly produce these products. This is conveniently accomplished by polymerizing propylene in a first reactor and discharging the polypropylene homopolymer from the first reactor into a secondary reactor where propylene and ethylene are copolymerized in the presence of the polypropylene. Gas-phase polymerizations of this type are described in the article by Ross, et al., "An Improved Gas-Phase Polypropylene Process," Ind. Eng. Chem. Prod. Res. Dev., 1985, 24, 149-154. This gas-phase technology has been extended to products containing significantly higher rubber/elastomer contents which are referred to as in-situ thermoplastic polyolefins (TPO).

Copolymers of propylene and ethylene obtained utilizing Ziegler-Natta catalysts have been described in the prior art. U.S. Patent No. 4,260,710 describes a process for producing propylene homopolymers and copolymers of propylene with other $\alpha$-olefins utilizing Ziegler-Natta catalysts in a stirred vessel using catalyst components which can include a titanium halide and an aluminum alkyl.

U.S. Patent Nos. 4,454,299 and 4,455,405 describe processes for the preparation of block copolymers of propylene and ethylene in two reaction zones using Ziegler-Natta catalysts. In these processes, propylene is first polymerized in gas form in an initial reaction zone and the resulting homopolymer is then transferred to a second reactor where a mixture of ethylene and propylene are polymerized therewith.

In U.S. Patent No. 4,547,552 a process is disclosed to produce chemically blended propylene polymer compositions having ethylene contents from 3 to 40 weight percent. The process comprises polymerizing propylene in a first stage with 0 to 5 mol percent of another olefin and, in a second stage, polymerizing propylene and ethylene or propylene, ethylene and another olefin in the presence of the reaction product from the first step. Rubbery propylene copolymer and crystalline ethylene polymer or copolymer are produced in this manner.

U.S. Patent No. 4,882,380 describes a gas-phase polymerization to produce products having an ethylene-propylene copolymer incorporated in a propylene homopolymer or copolymer matrix. This is accomplished by contacting propylene or another $\alpha$-olefin in a first reactor using the prescribed catalyst and then passing the mixture to a second reactor where ethylene and propylene are polymerized to provide an ethylene-propylene copolymer.

Other references dealing with multi-stage polymerizations of olefins include U.S. Patent Nos. 4,338,424; 4,420,592; 4,582,878; 4,703,094; 4,739,015; 4,740,550; 4,740,551; 4,814,377; 4,820,775; 4,902,483 and 4,977,210. Whereas all of the aforementioned processes provide useful polymers, difficulties are encountered as ethylene contents are increased. The major problem is the stickiness of the product due to the increased rubber content and the increased content of "fines." In extreme cases, the product may even be heterogeneous and two distinct types of particles can be detected. Analysis of these particles has shown one to contain little or no ethylene incorporation and the other to contain virtually all of the ethylene incorporation. It is also noted that the polymer properties may be deficient in some respects.

DE-A-4000224 describes an extensible film containing 100 to 60 parts by weight of an ethylene copolymer and 0 to 40 parts by weight of a linear polyethylene and a method of production thereof.

EP-A-74194 describes a propylene-ethylene random copolymer, a production process thereof and a film derived therefrom.

It would be highly advantageous if a process were available whereby polymerization conditions could be controlled to permit broadening the property envelope of the propylene-ethylene copolymers and to eliminate some of the aforementioned problems associated with heretofore known procedures. These and other advantages are realized with the present improved process.

The present invention relates to a gas-phase process for producing copolymers of propylene and ethylene in multiple reactors wherein propylene is homopolymerized or copolymerized with a minor amount of ethylene in a first reactor maintained at 50°C to 100°C and 250 psig to 650 psig (1.82369 MPa to 4.581594 MPa) in the presence of a titanium catalyst and organoaluminum cocatalyst and the product produced therein is fed to a second reactor maintained at 25°C to 80°C and 100 psig to 500 psig (0.789476 MPa to 3.54738 MPa) where the resulting copolymerized product mixture is copolymerized with a minor amount of ethylene or the resulting homopolymerized product mixture is further reacted with ethylene comprising:

(a) calculating a control parameter $Q_C$ using the integrated areas of $^{13}C$ NMR peaks corresponding to molecular structural features for copolymers of propylene and ethylene;
(b) defining the limits of $Q_C$ for the process;
(c) determining the actual value of the parameter, $Q_A$, for the copolymer obtained from the second reactor; and
(d) controlling the ethylene feed to maintain $Q_A$ within the limits defined in (b).

The present invention further relates to a propyleneethylene copolymer film having a 1% secant modulus from 5,000 psi to 70,000 psi (34.4738 MPa to 482.6332 MPa) and Elmendorf tear value greater than 100 grams per mil (25.4 μm) thickness in both MD and TD directions, said copolymer containing from 3 to 47 weight percent ethylene and having a melt flow from 0.01 to 500 dg/min and melting point from 115°C to 160°C.

More specifically, the present process utilizes two reactors for the polymerization of propylene and ethylene to produce copolymers as well as in-situ TPO's. In one highly useful embodiment of the invention, the polymerizations are carried out in the gas phase using fixed bed stirred reactors. In the case of producing copolymers, propylene is copolymerized in a first reactor with a minor amount of ethylene at 50°C to 100°C and 250 psig to 650 psig (1.823690 MPa to 4.581594 MPa) using a titanium catalyst and an organoaluminum cocatalyst. In the case of producing in-situ TPO's, propylene is homopolymerized in a first reactor under the same conditions given above with respect to the copolymerization. The copolymer or homopolymer product produced in the first reactor is then fed to a second reactor where propylene and ethylene are copolymerized at 25°C to 80°C and 100 psig to 500 psig 0.7894 to 3.5473 MPa. With respect to the copolymer product, the amount of ethylene employed in the second reactor is different than the amount employed in the first reactor.

The improvement of the process of the present invention which permits the preparation of copolymers having improved flexibility and in-situ TPO's having ethylene contents greater than 15 weight percent, both with improved physical properties, is the ability to independently control and balance conditions in the first and second reactors. This is accomplished by calculating a control parameter, $Q_C$, using the integrated peak areas of specified regions of the $^{13}C$ NMR spectrum for these copolymers and polymers and controlling the amount of ethylene fed to the primary and/or secondary reactors to maintain the value of the parameter within a defined range. This is conveniently achieved by monitoring the product produced, i.e., the copolymer or modified polypropylene obtained from the second reactor, and comparing the actual value obtained for the product, $Q_A$, with the control parameter or, more specifically, the limits defined therefor.

In a preferred embodiment of the invention, the control parameter $Q_C$ is derived from eight integral regions of the $^{13}C$ NMR spectrum as follows:

$$Q_C = \frac{A}{B}$$

where

$$A = 1.167R_1 + 0.75R_2 + 1.5R_3 + 1.5R_4 + 1.167R_8$$

$$B = 0.667R_1 + 0.5R_2 + R_5 + R_6 + R_7 + 0.667R_8$$

and $R_1$ through $R_8$ have the following peak assignments:

| | |
|---|---|
| $R_1$ | 37.9 PPM |
| $R_2$ | 37.5 PPM |
| $R_3$ | 33.2 PPM |
| $R_4$ | 31.2 - 30.9 PPM |
| $R_5$ | 30.4 PPM |
| $R_6$ | 30.0 PPM |
| $R_7$ | 27.4 PPM |
| $R_8$ | 24.9 PPM |

The process conditions for producing the copolymers are maintained so that, $Q_A$, the value of the product being produced, is from 0.90 to 1.35 and, more preferably, from 0.95 to 1.30.

Copolymers containing from 53 to 97 weight percent propylene and 3 to 47 weight percent ethylene and having values for Q, where Q is obtained in accordance with the above equation, in the range 0.90 - 1.35 are also discussed. Preferred copolymers will have flexural modulus from 40,000 psi to 70,000 psi (275.7904 MPa to 482.6332 MPa).

The process conditions for producing the in-situ TPO products are maintained so that the value of $Q_A$ is from 0.65 to 1.0 and, more preferably, from 0.75 to 0.98.

Improved in-situ TPO products containing from 15 to 30 weight percent ethylene and having values for Q from 0.65 to 1.0 are also included in the present invention.

The present invention still further relates to useful films having unique "hand" properties of softness and quietness, very high toughness and a melting point between that of polyethylene and polypropylene. The term hand, as employed herein, indicates that the films are soft and pliant with a cloth-like drape and feel. Toughness indicates resistance to puncture and tear. Also, where it is stated that the melting point is between polyethylene and polypropylene, it will be understood that the polyethylene referred to is LDPE and the polypropylene is highly isotactic propylene homopolymer.

The improved films of the present invention are produced from copolymers of propylene and ethylene obtained by copolymerizing the comonomers in two stirred-bed gas-phase reactors. The copolymers have processing characteristics which make them useful for the manufacture of both blown and cast films. The melting point of the copolymers, being between that of polyethylene and polypropylene, renders the films produced therefrom useful for a variety of applications.

More specifically, the films of the present invention are propylene-ethylene copolymer films having a 1% secant modulus from 5,000 psi to 70,000 psi (34.4738 MPa to 482.6332 MPa) and Elmendorf tear values greater than 100 grams per mil (25.4 $\mu$m) thickness in both MD and TD directions, said copolymer containing from 3 to 47 weight percent ethylene and having a melt flow from 0.01 to 500 dg/min and melting point from 115°C to 160°C.

Figure 1 is the $^{13}$C NMR spectrum showing the integrated peak areas for a propylene-ethylene copolymer produced in accordance with the present invention and used for the preparation of blown and cast films in accordance with the present invention.

Figure 2 is a DSC (Differential Scanning Calorimeter) Plot obtained for a propylene-ethylene copolymer produced in accordance with the invention, having a melting temperature of 143.59°C, which is used for the preparation of blown and cast films in accordance with the present invention.

Figure 3 is a plot of fractionation data obtained for a propylene-ethylene copolymer produced in accordance with the invention obtained by temperature rising elution fractionation (TREF). The ordinate is the output from the detector (DHT/DT) and the abscissa is the elution temperature.

Figure 4 is a plot of fractionation data obtained for a prior art impact copolymer obtained by temperature rising elution fractionation (TREF) presented for the purpose of comparison. The ordinate is the output from the detector (DHT/DT) and the abscissa is the elution temperature.

The present invention relates to an improved process for the polymerization of propylene and ethylene to produce copolymers having expanded property envelopes, most notably improved flexibility and physical properties, and in-situ TPO's, also referred to herein as modified polypropylenes, with increased ethylene contents. The process utilizes dual reactors connected in series for the polymerization. Whereas it is most advantageous to conduct both polymerizations in the gas phase, either the first or second reactor may be operated in a mode other than gas phase. For example, the copolymer produced in the first reactor may be obtained using a liquid pool or slurry polymerization.

In a first reactor, propylene is copolymerized with a minor amount of ethylene with respect to the process of producing copolymers of propylene and ethylene. With respect to the process of producing in-situ TPO's, propylene is homopolymerized in a first reactor. In both variations, the polymerization in the first reaction takes place at a temperature from 50°C to 100°C and pressure from 250 psig to 650 psig (1.823690 MPa to 4.581594 MPa) utilizing a titanium catalyst and an organoaluminum cocatalyst. More preferably, the temperature in the first reactor will be from 50°C to 90°C and the pressure will range from 300 psig to 450 psig (2.168428 MPa to 3.202642 MPa). In the process of producing copolymers, the amount of ethylene used will range from 0.5 to 12 weight percent and, more preferably, from 3 to 10 weight percent.

The product produced in the first reactor, either the semi-crystalline copolymer of propylene and ethylene, referred to herein as the first copolymer, or the highly isotactic homopolymer, is directly fed to a second reactor which is maintained at 25°C to 80°C and 100 psig to 500 psig (0.789476 MPa to 3.54738 MPa) where propylene and ethylene are copolymerized in the presence of either the first copolymer or the homopolymer. With respect to the feeding of the first copolymer, the amount of ethylene employed in the second reactor is higher than employed in the first reactor in order to produce a copolymer of propylene and ethylene with rubber-like characteristics. Ethylene levels from 2.5 to 35 weight percent and, more preferably, from 5 to 30 weight percent are employed. With respect to the feeding of the homopolymer, the amount of ethylene employed in the second reactor is sufficient to also produce a copolymer of propylene and ethylene with rubber-like characteristics. Ethylene levels sufficient to achieve 15 - 30 weight percent and, more preferably, 15 - 25 weight percent, ethylene incorporation are employed.

Polymerization in the second reactor is generally accomplished without additional catalyst; however, it may be advantageous, to introduce more catalyst to the second reactor. If more catalyst is employed, it can be the same as the catalyst used in the first polymerization or different. Preferably, the second polymerization reactor is operated at 40°C to 70°C and 100 psig to 350 psig (0.789476 MPa to 2.513166 MPa).

Copolymers employed to produce the films of the present invention are polymers of propylene with from 3 to 47 and, more preferably, 8 to 40 weight percent ethylene. Copolymers containing 80 to 91 weight percent propylene and 9 to 20 weight percent ethylene have been found to be particularly useful. The melting point of these copolymers generally ranges from 115°C - 160°C more typical melting points range from 125°C - 160°C. Especially useful copolymers for the invention have melting points from 130°C to 155°C.

More specifically, the copolymers employed to produce the films of the present invention are an intimate mixture of a semi-crystalline propylene-ethylene copolymer, containing from 0.5 to 12 weight percent ethylene, and a rubber-like propylene-ethylene copolymer, containing from 2.5 to 35 weight percent ethylene. As stated above, these copolymers are respectively produced in first (primary) and second (secondary) polymerization vessels which are connected in series so that the polymer produced in the first reactor is passed to the second reactor and present during the polymerization which occurs therein. In a highly useful embodiment of the invention, 3 to 10 weight percent ethylene is polymerized in the primary reactor with 5 to 30 weight percent ethylene being polymerized in the second reactor.

The use of dual or cascading reactors for the copolymerization of propylene and ethylene is known. Similarly, gasphase polymerizations utilizing stirred, fixed beds comprised of small polymer particles are also known. For additional information regarding gas-phase polymerizations and a schematic flow diagram of the process, reference may be made to the article by Ross, et al., in Ind. Eng. Chem. Prod. Res. Dev., 1985, 24: 149-154.

A highly active titanium catalyst activated by contact with an organoaluminum cocatalyst is utilized to produce polymer particles for these polymerizations. The polymerizations are carried out in the substantial absence of liquid reaction medium and gas velocity within the stirred-bed is maintained below the onset of fluidization. Depending on their compositional makeup, gases can be recirculated through external heat exchangers for cooling or they can be partially condensed. Cooled monomer is recirculated into the reactor and provides thermal control. The recirculated monomer vaporizes when it is introduced into the reactor so that polymerization occurs in the gas phase. In the preferred mode of operation, i.e., stirred, fixed bed gas phase, the first and second reactors are fitted with spiral agitators to maintain a turbulent mechanically fluidized bed of polymer powder and prevent agglomeration.

Each reactor typically has its own control system(s) and is capable of independent operation. In the usual conduct of the process, propylene and ethylene monomers are passed through desiccant beds prior to injection into the reactor. Means are usually provided to individually meter the propylene, ethylene, hydrogen for molecular weight control, catalyst and cocatalyst. This makes it possible to more readily control and maintain the desired reactor conditions. If desired, monomer may be injected into the recirculated gas stream for introduction into the system. Suitable controls are also provided to vary the pressure, temperature and compositional analysis to facilitate maintaining a constant environment in the reactor and/or to permit adjustment of conditions to bring the system into conformance. Residence times in both reactors are of the order of 1 to 4 hours.

The semi-crystalline copolymer or highly isotactic polypropylene produced in the first reactor is introduced into a second reactor. This is facilitated by operating the primary reactor at a somewhat higher pressure than that maintained in the secondary reactor. Propylene, ethylene and hydrogen, as required, are metered into the second reactor so that ethylene and propylene are copolymerized in intimate admixture with the first copolymer or propylene homopolymer. In usual practice, there is sufficient catalyst present with the first polymer or polypropylene to bring about polymerization in the second reactor and no further catalyst addition is required. Under certain circumstances, however, it may be advantageous to add additional catalyst/cocatalyst which can be the same or different as that used in the first reactor.

The final copolymer or modified polypropylene product which is an intimate mixture of the semi-crystalline propylene-ethylene copolymer or highly isotactic homopolymer produced in the first reactor and rubber-like copolymer produced in the second reactor, is discharged into a pressure letdown vessel where low pressure recycle gas consisting largely of unreacted monomers is volatilized for recycling. The copolymer or polymer can be processed to incorporate one or more additives and, if desired, pelletized. It is typically not necessary that the polymer exiting the second reactor be processed in a catalyst deactivation unit; however, for applications where extremely low levels of catalysts are required, this may be done.

Ethylene content of the copolymers can range from 3 up to about 47 weight percent. More typically the total ethylene will be from 8 to 40 weight percent. In an especially useful embodiment of the invention, the copolymer is comprised of 80 to 91 weight percent propylene and 9 to 20 weight percent ethylene. Ethylene contents of the polymers will be greater than 15 weight percent and can range up to 30 weight percent or above. More typically, the amount of ethylene in the TPO will be from 15 to 25 weight percent. If desired, other $\alpha$-olefins containing from 4 to 8 carbon atoms can be included in the polymerization and incorporated into the copolymers and polymers. Butene-1, pentene-1 and actene-1 are useful comonomers for this purpose.

Hydrogen is generally included in both reactors for control of molecular weight. The amount of hydrogen can range from 0.1 up to about 10 mole percent. More typically, hydrogen levels range from 0.1 to 5 mole percent in the primary reactor and from 1 to 10 mole percent in the secondary reactor.

Small amounts of known modifiers or inhibitors may also be included in these polymerizations. These can include compounds such as oxygen, carbon monoxide, carbon dioxide, sulfur dioxide, glycol ethers, aliphatic and aromatic alcohols, carboxylic acids, sulfonic acids, water, and primary or secondary amines. The use of compounds of this type are disclosed in U.S. Patent No. 4,739,015 and European Patent Application 86308952.0, published June 10, 1987, Publication No. 0225099 and reference may be had thereto for additional detail.

To effect polymerization of propylene and ethylene, a high activity Ziegler-Natta catalyst comprised of a titanium-containing catalyst component and organoaluminum cocatalyst component is necessarily employed. Such catalysts are known and are referred to herein as Ti/Al catalysts. These may include additional components, such as a support, modifying compound(s), magnesium and other metal compound(s) and electron donating compound(s).

Ti/Al catalyst systems utilized for the present process may be unsupported or they may be associated with conventional support materials. When supported, the support may be treated prior to incorporation of the titanium component. Conventional inorganic materials, such as silica, alumina, magnesium chloride, magnesium oxide and magnesium hydroxide, can be used as supports.

Titanium compounds used generally correspond to the formula $Ti(OR)_nX_m$ where R is aryl and/or alkyl, X is halogen, n is 1 to 4, m is 0 to 3 with the proviso that m+n = 4 . Illustrative titanium compounds include: tetracresyl titanate, titanium tetrabutoxide, titanium tetranonolate, tetra 2-ethylhexyltitanate, tetra isobutyltitanate, tetra n-propyltitanate, tetra isopropyltitanate, titanium tetrachloride, titanium tetrabromide, methoxytitanium trichloride, ethoxytitanium trichloride and diethoxytitanium dichloride. Trivalent compounds of titanium, such as titanium tribromide and titanium trichloride, may also be utilized.

Examples of useful magnesium compounds which can be used in the preparation of the catalysts include: magnesium oxide, magnesium hydroxide, hydrotalcite, carboxylic acid salts of magnesium, alkoxy magnesiums, aryloxy magnesiums, alkoxy magnesium halides, aryloxy magnesium halides, magnesium dihalides, organomagnesium compounds and the like. Magnesium chloride ($MgCl_2$) is widely used for the preparation of useful catalysts for polymerizing propylene and ethylene.

Representative electron donors include: ethers, alcohols, esters, aldehydes, aliphatic (fatty) acids, aromatic acids, ketones, nitriles, amines, amides, urea, thiourea, isocyanates, azo compounds, phosphines, phosphites, thioethers and thioalcohols. Specifically, there can be mentioned diethyl ether, di-n-butyl ether, diphenyl ether, ethylene glycol monomethyl ether, diethylene glycol dimethyl ether, methanol, ethanol, propanol, ethyl acetate, vinyl acetate, acetaldehyde, benzaldehyde, acetic acid, propionic acid, succinic acid, acrylic acid, benzoic acid, methyl ethyl ketone, benzophenone, acetonitrile, diethylamine, tributylamine, triethylphosphine, triphenylphosphine oxide, and triethylphosphite.

The organoaluminum cocatalyst is usually an alkylaluminum or alkylaluminum halide and can include: trimethylaluminum, triethylaluminum, tri-n-propylaluminum, tri-n-butylaluminum, tri-i-butylaluminum, tri-n-hexylaluminum, tri-2-methylpentylaluminum, tri-n-octylaluminum, diethylaluminum monochloride, di-n-propylaluminum monochloride, di-i-butylaluminum monochloride, diethylaluminum monobromide, diethylaluminum monoiodide, diethylaluminum hydride, methylaluminum sesquichloride, ethylaluminum sesquichloride, ethylaluminum dichloride, 1-butylaluminum dichloride. Mixtures of these organoaluminum compounds can also be advantageously employed.

In addition to the foregoing, other compounds may be used in the preparation of catalysts useful for gas-phase polymerization of propylene and ethylene. These compounds serve different functions and, in some cases, they may be multi-functional. They may act as activators or modifiers for the titanium compound or support or may themselves have catalytic or cocatalytic activity. Examples of such compounds include: silicon halides, such as silicon tetrachloride; boron halides, such as boron trichloride; silanes, such as hexyltrimethoxysilane, amyltriethoxysilane, isobutyltrimethoxysilane, trichlorosilane, dichlorosilane and dibromosilane; hexaalkyldisilazanes, such as hexamethyl disilazane; and vanadium compounds, such as vanadium oxychloride and vanadium tetrachloride.

Ti/Al catalysts used for the gas-phase process of the invention are high activity catalysts, that is, they are capable of producing more than 5,000 grams copolymer per gram of catalyst. In a more preferred embodiment, Ti/Al catalysts capable of producing 7,000 grams or more copolymer per gram of catalyst are used. The amount of titanium catalyst used with supported catalysts is generally such that residual Ti contents in the copolymer are less than 10 ppm and, more preferably, below 5 ppm. With unsupported Ti/Al catalysts, the amount of catalyst used is such that residual Ti is less than 55 ppm and, more preferably, less than 40 ppm. Useful Ti/Al catalysts which can be employed for the process are described in U.S. Patent Nos. 4,260,710; 4,309,521; 4,454,299; 4,547,552; 4,739,015; 4,814,377; 4,820,775 and 5,037,789.

In a particularly useful embodiment, highly active supported Ti/Al catalysts wherein the support is treated to remove or react surface hydroxyl groups prior to contacting with the titanium-containing compound are employed. Such pre-treatment or reaction of the support with a variety of materials makes it possible to produce catalysts which possess high activity for the polymerization of olefins in gas-phase processes. Such catalysts and their use for the homopolymerization of propylene are described in U.S. Patent Nos. 4,950,631; 5,034,365; 5,051,388; 5,104,949 and 5,143,883.

One preferred supported catalyst of the above type useful for the preparation of the propylene-ethylene copolymers in accordance with the invention, referred to as embodiment I, is obtained by:

(a) treating silica to remove surface hydroxyl groups by calcining said silica in an inert atmosphere and treating with a hexaalkyl disilazane; (b) contacting said treated silica with (1) a modifying compound selected from the group consisting of silicon halides, boron halides, aluminum halides, alkyl silicon halides and mixtures thereof; and (2) at least one hydrocarbon soluble magnesium-containing compound selected from the group consisting of hydrocarbyloxy magnesiums, hydrocarbyloxymagnesium halides and mixtures thereof; said contacting steps (1) and (2) occurring in random order; (c) contacting said product of step (b) with at least one titanium-containing compound having the structural formula $Ti(OR)_nX_m$, where R is aryl, alkyl or mixtures thereof; X is halogen; n is an integer of 1 to 4; m is 0 or an integer of 1 to 3; and the sum of m and n is 4; and (d) treating the product of step (c) with a titanium-containing compound having the structural formula $TiX^1_p(OR^1)_q$, where $X^1$ is halogen; $R^1$ is aryl or alkyl; p is an integer 1 to 4; q is 0 or an integer of 1 to 3; and the sum of p and q is 4, with the proviso that the titanium-containing compound of this step is not the same as the titanium-containing compound of step (c). Supported catalysts of this type are described in U.S. Patent No. 4,950,631.

In another preferred embodiment (embodiment II), the catalyst is obtained by treating silica to remove surface hydroxyl groups by calcining in an inert atmosphere and treating with a hexaalkyl disilazane and reacting said modified silica support having a selective distribution of reactive hydroxyl groups with a magnesium compound reactive with said surface hydroxyl groups, optionally reacting the thus obtained product with a silicon halide, alkyl silicon halide, boron halide or aluminum halide, further reacting the so-produced first material with a tetra-substituted organo halogen-free titanium compound wherein the organic moiety sterically hinders accessibility of said organo titanium compound to the reactive sites on the modified silica support and thereafter reacting the so-produced second material with a titanium halide. Such catalysts are described in U.S. Patent No. 5,143,883.

For yet another preferred embodiment (embodiment III), the catalyst is prepared by (a) contacting silica, in random order, with (1) at least one hydrocarbon soluble magnesium-containing compound; and (2) a first modifying compound selected from the group consisting of silicon halide; boron halides, aluminum halides and mixtures thereof followed by a second modifying compound selected from the group consisting of a silane of the formula $SiH_1X^2_s$, where $X^2$ is halogen; r is an integer of 1 to 3; and s is an integer of 1 to 3, with the proviso that the sum of r and s is 4, hydrogen halides having the structural formula $HX^3$, where $X^3$ is halogen, and mixtures thereof, said sequence of contact of silica with said components (1) and (2) being random; (b) contacting the product of step (a) with a first titanium-containing compound having the structural formula $Ti(OR)_mX_n$, where R is hydrocarbyl or cresyl; X is halogen; m is an integer of 1 to 4; and n is 0 or an integer of 1 to 3, with the proviso that the sum of m and n is 4; and (c) contacting the product of step (b) with a second titanium-containing compound having the structural formula $TiX^1_p(OR^1)_q$, where $X^1$ is halogen; $R^1$ is hydrocarbyl; p is an integer of 1 to 4; q is 0 or an integer of 1 to 3, with the provisos that the sum of p and q is 4 and that said first titanium-containing compound and said second titanium-containing compound are different. Catalysts of this type are described in U.S. Patent No. 5,034,365.

For another preferred embodiment (embodiment IV), a highly useful catalyst is produced by (a) treating an inert inorganic support with hexamethyl disilazane to remove surface hydroxyl groups and heating at 100°C - 150°C for 1/2 to 3 hours; (b) contacting said treated inert inorganic support with a hydrocarbon soluble magnesium compound; (c) contacting said product of said step (b) with a modifying compound selected from the group consisting of silicon halides, boron halides, aluminum halides, hexaalkyl disilazanes and mixtures thereof; (d) contacting said product of said step (c) with a vanadium compound having the structural formula $V(O)_3X^1_{4-s}$, where $X^1$ is halogen; and s is 0 or 1; a first titanium-containing compound having the structural formula $TiX^3_p(OR^3)_q$, where $X^3$ is halogen; $R^3$ is hydrocarbyl; p is an integer of 1 to 4; and q is 0 or an integer of 1 to 3, with the proviso that the sum of p and q are 4 and, optionally, a second titanium-containing compound of the formula $Ti(OR^2)_nX^2_m$, where $R^2$ is hydrocarbyl; $X^2$ is halogen; n is an integer of 1 to 4; and m is 0 or an integer of 1 to 3 with the proviso that the sum of n and m is 4; and with the further proviso that if two titanium-containing compounds are used said first and said second titanium-containing compounds are not identical. These catalysts are described in U.S. Patent No. 5,051,388.

A final preferred embodiment (embodiment V) utilizes a catalyst component obtained by (a) heating an inert inorganic support to a temperature of 100°C - 150°C for 1/2 to 3 hours to remove surface hydroxyl groups; (b) contacting the treated inert inorganic compound with a hydrocarbon soluble magnesium compound; (c) contacting the product of said step (b) with a modifying compound selected from the group consisting of silicon halides, boron halides, aluminum halides, alkyl silicon halides, hexaalkyl disilazanes and mixtures thereof; and (d) contacting the product of said step (c) with a vanadium compound having the structural formula $V(O_2)X^1_{4-s}$, where $X^1$ is halogen and s is 0 or 1; a first titanium-containing compound having the structural formula $TiX^3_p(OR^3)_q$, where $X^3$ is halogen, $R^3$ is hydrocarbyl, p is an integer of 1 to 4, and q is 0 or an integer of 1 to 3, with the proviso that the sum of p and q are 4 and, optionally, a second titanium-containing compound of the formula $Ti(OR^2)_nX^2_m$, where $R^2$ is hydrocarbyl, $X^2$ is halogen, n is an integer of 1 to 4, and m is 0 or an integer of 1 to 3 with the proviso that the sum of n and m is 4; and with the further proviso that if two titanium-containing compounds are used said first and said second titanium-containing compounds are not identical. The catalysts of this preferred embodiment are disclosed in U.S. Patent No. 5,104,949.

All of the supported titanium catalyst components of the aforementioned preferred embodiments I-V are utilized with one or more cocatalysts in the polymerization process. At least one cocatalytic agent which is an organoaluminum compound and, more preferably, an aluminum alkyl or alkylaluminum halide is combined with the titanium component. Further advantages are realized with certain of titanium components if a second cocatalyst silane component is also present. Useful silanes are hydrocarbylalkoxysilanes and have the general formula $R'_a(OR'')_{4-a} Si$ where R' and R'' are the same or different hydrocarbyl groups.

Gas-phase stirred bed polymerizations processes are recognized for their reliability and ability to be operated continuously for extended periods to produce large volumes of polymer. Because of the extended residence times for these processes, feed forward control is widely practiced to control reactor variables. However, as one or more of the process variables are controlled or adjusted to alter a particular property, this often has adverse affect on one or more of the other essential properties. With the present invention, it is now possible through the use of a derived parameter to control/adjust conditions in the primary and/or secondary reactors in a manner so that an improved balance of polymer properties and expanded property envelope can be obtained. In a particularly advantageous embodiment, propylene-ethylene copolymers having improved flexibility and physical properties are produced. Furthermore, it is possible to produce these improvements in a consistent manner and to minimize or eliminate the problems heretofore observed in the production of high ethylene content copolymers of this type. It is further possible with the present invention, after achieving conditions in the process which produce an optimum balance of properties, to maintain this balance of properties by making adjustments to compensate for unanticipated fluctuations in the system.

Control of the process is accomplished by developing a control parameter, referred to as $Q_C$, based on selected integrated peak areas of the $^{13}C$ NMR spectrum for propylene-ethylene copolymers. After acceptable limits are defined for $Q_C$, the product produced in the second reactor is analyzed and the actual value obtained for the product, referred to as $Q_A$, compared with the control parameter to determine conformance/nonconformance. Adjustments are made, as required, to the ethylene feed and, if necessary, other process variables to bring the $Q_A$ into conformance with the limits defined for $Q_C$.

It will be understood by those skilled in the art that, if the overall (total) pressure in the reactor(s) is maintained at the same level, any change in ethylene pressure resulting from adjustments to the ethylene feed in response to the $Q_C$ will require a corresponding change in one or more of the other components present in the gas phase. A change in the partial pressure of ethylene will necessarily change the partial pressure of propylene, hydrogen and any other gas phase components at constant total pressure. The total pressure in the reactor may, on the other hand, be changed in response to changes in the amount of ethylene fed so that the partial pressures at the other gaseous components will remain unchanged.

A number of control parameters may be developed depending on the particular $^{13}C$ NMR peak areas used and the particular algorithm used to calculate the control. In general, however, the control parameter(s) used will be derived using all or some combination of the following $^{13}C$ NMR peaks for solutions of ethylene-propylene copolymers and generally accepted by the scientific and technical communities as corresponding to molecular structural features of these copolymers:

| CHEMICAL SHIFT (PPM) | ASSIGNMENT |
|---|---|
| 45.6 - 47.5 | $S_{\alpha\alpha}$ [CH$_2$ of PPP Triads] |
| 37.9 | $S_{\alpha\Gamma}$ [CH$_2$ in PEP] |
| 37.5 | $S_{\alpha\delta}$+ [CH$_2$ in EEP and PEEP] |
| 33.2 | $T_{\Gamma\Gamma}$+ [CH in EPE] |
| 31.2 - 30.9 | $T_{\beta\Gamma}$+ [CH in PPE] |
| 30.4 | $S_{\Gamma\delta}$+ [CH$_2$ in PEEP] |
| 30.0 | $S_{\delta\delta}$+ [CH$_2$ in EEEE] |
| 29.0 - 28.4 | $T_{\beta\beta}$ [CH in PPP] |
| 27.4 | $S_{\beta\Gamma}$+ [CH$_2$ in EEEP and PEEP] |
| 24.9 | $S_{\beta\beta}$ [CH$_2$ in PEP] |
| 21.6 - 19.5 | P [CH$_3$ in all P Triads] |

The eleven $^{13}$C NMR peaks listed above have been widely used in the literature to calculate sequential distributions of the six theoretically possibly triads, three dyads, and the overall compositions of these copolymers of ethylene and propylene. Details regarding the use of these $^{13}$C NMR peak areas for the calculation of composition and monomer sequence distributions in copolymers and problems associated with the resolution and determination thereof are available in the text of J.C. Randall, Polymer Sequence Determination, Academic Press (1977) or the paper by the same author in JMS - Rev. Macromol. Chem. Phys., C29 (2 and 3), 201-317 (1989). Whereas the various methods described by Randall involve the addition and subtraction of numerous peak areas which can result in the summation of errors, the method of the invention uses fewer peaks. Determinations will, of course, depend on the accuracy of the individual integrals and resolution of the peaks in the spectrum.

In one highly useful embodiment of the invention, one or more control parameters derived from eight of the above-identified peak areas, identified as $R_1$-$R_8$, are utilized. The peaks $R_1$ through $R_8$ correspond to the following chemical shifts: $R_1$ 37.9 PPM; $R_2$ 37.5 PPM; $R_3$ 33.2 PPM; $R_4$ 31.2-30.9 PPM; $R_5$ 30.4 PPM; $R_6$ 30.0 PPM; $R_7$ 27.4 PPM and $R_8$ 24.9 PPM. In identifying and resolving the aforementioned peak areas, the methyl peak due to isotactic PPPPP pentads is used as a chemical shift reference line and is set to 21.78 PPM.

In another highly useful and preferred embodiment of the invention, the control parameter $Q_C$ is derived from the eight integral regions of the $^{13}$C NMR spectrum in accordance with the equation

$$Q_C = \frac{A}{B}$$

wherein

$$A = 1.167R_1 + 0.75R_2 + 1.5R_3 + 1.5R_4 + 1.167R_8$$

$$B = 0.667R_1 + 0.5R_2 + R_5 + R_6 + R_7 + 0.667R_8$$

where $R_1$ through $R_8$ correspond to the previously identified peak areas. When $Q_C$ conforms to the above definition, the defined limits for $Q_C$ in the process for producing copolymers will range from 0.90 to 1.35 and, more preferably, from 0.95 to 1.30. In the event the actual value $Q_A$ obtained drops below the 0.90 minimum limit, the ethylene feed to the primary reactor would be increased and/or the ethylene feed to the secondary reactor would be decreased. In the process for producing TPO's, the defined limits for $Q_C$ will range from 0.65 to 1.0 and, more preferably, from 0.75 to 0.98. In the event the actual value obtained for $Q_A$ drops below the 0.65 minimum limit, the ethylene feed to the secondary reactor would be decreased and temperature increased, for example, to maintain the desired level of total ethylene in the copolymer. Adjusting the ethylene feed will change the ratio of the partial pressures of the gaseous components in the reactor. Other process conditions and feed rates may but are not necessarily changed to bring the system, i.e., process and copolymer composition, into conformance. When $Q_A$ exceeds the maximum permissible limit of 1.35 in the process for producing copolymers, the ethylene feed to the primary reactor would be reduced and/or the ethylene feed to the secondary reactor would be increased. When $Q_A$ exceeds the maximum permissible limit of 1.0 in the process for producing TPO's, the ethylene feed to the secondary reactor would be increased. Additionally, the temperature in the second reactor could be decreased in order to maintain the desired total level of ethylene in the copolymer.

Whereas $Q_C$ is by itself a convenient and highly useful parameter for controlling the reaction conditions in the primary and secondary reactors, it may also be utilized in conjunction with other parameters obtained using other combinations of the characteristic $^{13}C$ NMR peaks. Use of the control parameter $Q_C$ and any of the other calculated parameters related thereto is useful because they do not require a prior knowledge of the amount and composition of polymer produced in the primary reactor. It will be appreciated by those skilled in the art that if comonomers other than ethylene are employed, peak assignments will have to be modified to correspond to the analogous structural features for propylene-butene-1 copolymers, for example, the structural features for ethyl groups rather than methyl groups will be used.

In addition to being used to control polymerization conditions, the defined parameters also describe and distinguish subtle differences in the properties of the copolymers and polymers. An illustration of the control of polymer properties includes the ability to obtain improved impact properties at temperatures as low as -40°C and -50°C at high rubber contents. Also, the process makes it possible to widely vary flexural modulus by judicious choice of catalyst and reactor conditions. In this manner, the stiffness/impact balance can be readily tailored to meet the specific needs of an end-user's application. Using this process, it is also possible to obtain highly desirable dispersion of the rubber phase so that improved levels of heat distortion temperatures can be obtained. Even with materials having relatively high rubber contents only modest changes in heat deflection temperatures occur.

The copolymers produced in accordance with the process of the present invention have a desirable balance of useful properties but, most notably, have improved softness and a melting point between polyethylene and polypropylene. While melt flow rates of these copolymers can range from 0.01 up to 500, they more commonly range from 0.1 to 100. It is even more advantageous if the copolymer melt flow rates are from 0.2 to 40. Flexural modulii of the copolymers can range from 100,000 psi (689.476 MPa) to as low as 20,000 psi (137.8952 MPa) but, more preferably, will be from 40,000 psi to 70,000 psi (275.790 MPa to 482.633 MPa).

Films produced from the above described propyleneethylene copolymers have a 1% secant modulus from 5,000 psi to 70,000 psi (34.4738 MPa to 482.633 MPa) and, more preferably, from 15,000 psi to 65,000 psi (103.421 MPa to 448.159 MPa). Especially useful films which are very flexible and have a soft feel have a 1% secant modulus from 25,000 psi to 60,000 psi (172.369 MPa to 413.685 MPa). Even though they possess a high degree of softness and flexibility, the films are tough and resist tear and puncture. The films typically have Elmendorf tear values greater than 100 grams per mil (25.4 μm) thickness in both the MD and TD directions. For cast films, Elmendorf tear values are generally greater than 200 grams per mil (25.4 μm) in the MD direction. For blown films Elmendorf tear values are generally greater than 120 grams per mil (25.4 μm) in both the MD and TD directions.

Other general features of the soft copolymers include: processability in both monolayer and coextrusion in blown and cast film applications, unique hand properties and very high toughness. Compared to homopolymer and conventional random copolymers of propylene, the copolymers of the invention have better room and low temperature impact strength and lower modulus. When compared to the so-called impact propylene polymer films, advantages of the present products include: lower modulus, much higher tear strength, bruise resistance, better room and low temperature impact strength and good contact clarity with similar haze. While certain resins in the polyethylene homopolymer and copolymer families could have similar hand properties and physical properties, the melting points of these resins would be significantly lower than that of the present copolymers. It will be apparent from the foregoing that the films made with the propylene-ethylene copolymers of the present invention will have a balance of properties heretofore not possible. It is even more advantageous that these properties are obtained from a reactor produced copolymer without the need for further blending or processing to achieve the desired softness/impact balance.

The copolymers of the present invention are readily processable and are suitable for the preparation of either blown or cast film using available equipment and processing conditions. The term film, as employed herein, is intended to encompass both films and sheets even though conventional practice in the industry considers products with thickness of 10 and below to be films and products with thicknesses above 10 mils (254 μm) to be sheeting. Conventional continuous blown film processes whereby a molten cylinder of thermoplastic resin is simultaneously axially drawn and radially expanded can be used. In these processes the hot tubular extrudate exiting the annular die is cooled by air from an air ring on the outside of the tube. Cooling is sometimes applied to the inside of the tube as well. The copolymers of the invention may be processed utilizing either horizontal or vertical blown film configurations.

Conventional casting procedures may also be employed to produce the improved films of the invention. In these operations, the thermoplastic material is melted and continuously extruded through a slot die, typically onto a chill roll where it is quenched and solidified. The film is stripped from the chill roll and wound. The film may be further processed, e.g., electrostatically treated to modify surface characteristics or oriented in one or both directions to improve physical properties. Biaxial orientation requires that the film be stretched longitudinally in the machine direction and across the film in the transverse direction. Stretching in this manner modifies the molecular orientation of the film and produces products having higher tensile and impact strength. The general appearance and clarity of the film may also be improved.

The application for which the film will be used will generally dictate whether the film will be produced by blowing or casting. Since a cast film typically has less gauge variation and better clarity, casting procedures will be employed where these properties are important considerations for the application involved. Whereas blown film gauge can vary as much as ±7-10%, average gauge variation of cast film is generally about one-half that and can even be lower with judicious control of process parameters. The ability for better control of cooling in casting operations also make it possible to achieve relatively low crystallinity with a resultant improvement in film clarity. On the other hand, blown film is generally considered to have an edge where strength is a factor. Unless oriented, cast film generally has strength only in the machine direction.

Based on the unique properties of the present copolymers, it is anticipated that films produced therefrom may be utilized in applications where other polyolefins and flexible polymers are presently employed. Possible uses for the film products of the invention include: atmospheric balloons, grocery bags, typewriter ribbons, geo membranes, health care films, biohazard bags, surgical drapes, disposable garments, diaper liners, intravenous solution bag overwraps, meat wraps, microwave bags, boil-in bags, inflatable toys, automotive masking tape, frozen food packaging, agricultural films, construction films, polymer and paper coatings and laminations, refuse bags and liner films.

The present copolymer products may be utilized as a monolayer film or they may constitute one or more layers of a multilayer film construction. In the latter applications, the films of the invention can be associated with one or more film layers of the same or different polymer. The copolymer films may constitute the outside layer of a multilayer construction or it may be positioned between two or more layers of the same or different polymer. Illustrative of the various materials which can be layered with the copolymer film, are nylon, polyvinyl chloride (PVC), polyvinylidene chloride (PVDC), high density polyethylene (HDPE), low density polyethylene (LDPE), linear low density polyethylene (LLDPE), ethylene-vinyl acetate copolymer (EVA), ethylene-n-butyl acrylate copolymer (EnBA), and hydrolyzed ethylene-vinyl acetate copolymer (EVOH).

The multilayer film constructions can be produced by known methods including blown and cast film coextrusion, dry lamination and extrusion lamination. It is generally not necessary to use an adhesive to adhere the copolymer layer to the other film layers but an adhesive layer, commonly referred to as a tie layer, may be employed with certain substrates to increase interlayer adhesion. Conventional tie layers known to the art can be employed for this purpose.

To better understand the operation of the process and to demonstrate the improved balance of copolymer properties obtained therewith, and to better understand the operation of the process relating to the production of high ethylene content in-situ TPO's which are non-sticking and free-flowing, the following detailed examples are provided for illustration. The following examples illustrate the invention more fully and are not intended to be limiting. Variations on the procedures described will be apparent to those skilled in the art and are intended to be within the scope of the invention. All parts and percentages in the examples are given on a weight basis unless otherwise indicated.

Data reported in the examples and comparative examples were obtained using the following procedures:

(1) Tensile and elongation properties - ASTM D 882
(2) 1% Secant Modulus - ASTM D 882
(3) Tear (Elmendorf) - ASTM D 1922
(4) Total Energy Dart Drop (TEDD) and Dart Drop Impact - ASTM 4272
(5) Energy Absorbing Impact (EAIT) - determined using a Model 4092 energy absorption impact tester from Kayeness Inc. in accordance with the manufacturers procedure manual.
(6) Puncture - determined using an Instron machine in accordance with the standard procedure.

## EXAMPLE 1

Preparation of Titanium Catalyst Component: Thirty pounds (13.62 kg) hexamethyl disilazane-treated silica (Crosfield EP-10) containing 4% carbon by analysis on silica was charged to a vessel and heated for 8 hours with a nitrogen purge while heating at a temperature of 138°C - 149°C. The treated silica was cooled to 26.5°C under 30 psi (0.206 MPa) $N_2$ and 89 lbs 12 oz (40.745 kg) 2-methyl-1-pentyloxymagnesium chloride added with stirring. The mixture was heated at 90.5°C under a nitrogen purge for 2-3 hours and then cooled to 35°C under 15 psi (0.103 MPa) $N_2$. Heptane (150 lbs) (68.1 kg) and 65 lbs 4 oz. (29.623 kg) silicon tetrachloride solution (35 wt. % in heptane) were then added. The $SiCl_4$ was added at a rate of 10 lbs (4.54 kg) per 10 minutes. When the addition was complete, the mixture was heated to 48.9°C - 54.4°C and maintained for 1 hour. The mixture was then cooled and the solids permitted to settle for 2 hours. The bulk of the liquid was siphoned off and 150 lbs (68.1 kg) fresh heptane added with stirring for 15 minutes. This mixture was permitted to settle for 2 hours and the siphoning repeated. Heptane (170 lbs) (77.18 kg) was again added while stirring followed by the addition of 19 lbs 1 oz. (8.65 kg) titanium cresylate solution (40% in heptane) and then 109 lbs (49.48 kg) titanium tetrachloride. The mixture was heated and maintained at 100°C ± 12°C for 2 hours. After cooling to below 88°C 200 lbs (90.8 kg) heptane was added and agitation was stopped. The reactor was cooled to below 65°C and the mixture allowed to settle for 2 hours. The liquid was siphoned off and 200 ml fresh heptane added followed by stirring for 15 minutes and 1 hour settling. This washing procedure was repeated 4 more times. The catalyst was then dried at 99°C ± 12°C with a nitrogen purge until all the heptane was removed. The product was analyzed by x-ray fluorescence and found to contain 2.28% Ti, 3.84% Mg, 46.8% Si and 15% Cl.

Polymerization of Propylene and Ethylene: Two conventional 800 liter gas-phase polymerization reactors, each equipped with a stirrer to maintain turbulent mechanical fluidization of the polymer powder within, were connected so that polymer exiting the first (primary) reactor was introduced into the second (secondary) reactor. Ethylene and propylene were continuously metered at controlled rates to the first reactor which was maintained at 76.5°C and 350 psig (2.513 MPa). A hydrogen feed rate of 0.18 SCFH (5.096 dm$^3$/h) was maintained to the primary reactor and the above-prepared titanium catalyst and two cocatalysts were also independently metered. The first cocatalyst was triethylaluminum which was introduced as a 25% solution in heptane. The second cocatalyst, isobutyltrimethoxysilane, was introduced as a 15% solution in heptane. The catalyst and cocatalyst agents were fed at rates to maintain a triethylaluminum/silane/titanium ratio of 120/16/1.

Ethylene and propylene were also continuously metered at controlled rates to the second reactor. The secondary reactor was operated 51.6°C and 200 psig (1.4789 MPa). Hydrogen was metered at a rate of 5.45 SCFH (154.32 dm$^3$/h). No catalyst or cocatalyst was added to the second reactor. Alcohol was introduced to the second reactor at a feed rate of 115 gms/hr to control reaction rate.

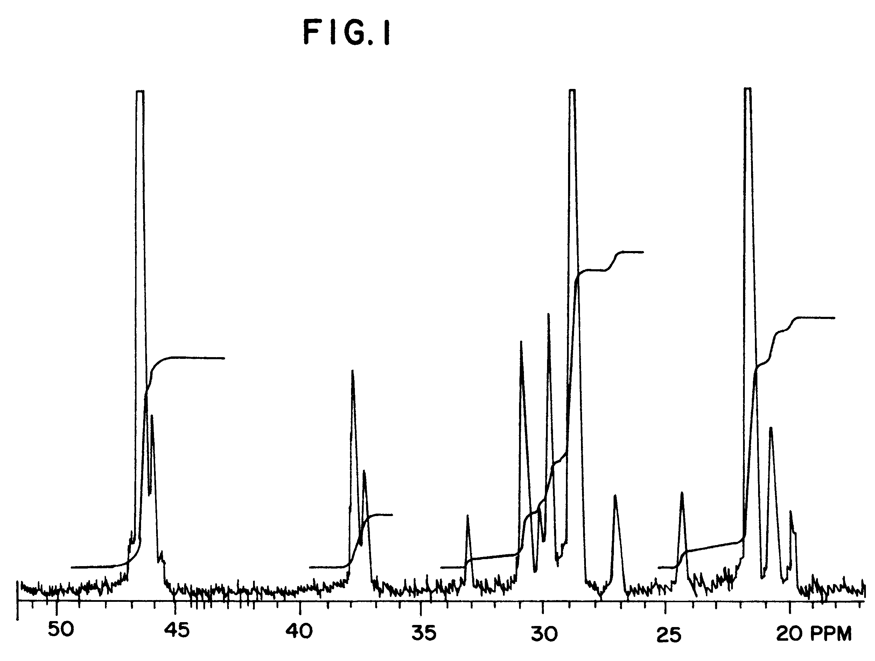

For this polymerization, a control value in the mid-range of the defined limits for the $Q_C$ parameter developed for propylene-ethylene copolymers was selected and the feed rates of propylene and ethylene into the primary and secondary reactors were maintained to achieve and maintain this selected control value. This mid-range value was selected to provide a copolymer with representative properties within the broader property envelope possible with the products. Specifically, ethylene was fed at a rate of 17 lbs/hr (7.718 kg/h) to the primary reactor and the feed rate of propylene into the primary reactor was 281 lbs/hr (127.5 kg/hr). The feed rates of propylene and ethylene to the secondary reactor were 32 lbs/hr (14.528 kg/h) and 31.5 lbs/hrs. (14.3 kg/h), respectively. Under these operating conditions the actual value, $Q_A$, obtained for the copolymer produced under steady state conditions was 1.14. This value was determined based on $^{13}$C NMR analysis of the resulting copolymer product in accordance with the equation $Q = A/B$ where A and B and the peak areas $R_1$-$R_8$ utilized to obtain A and B are as previously defined. Figure 1 shows the $^{13}$C NMR spectrum obtained for the copolymer with the integrated peak areas.

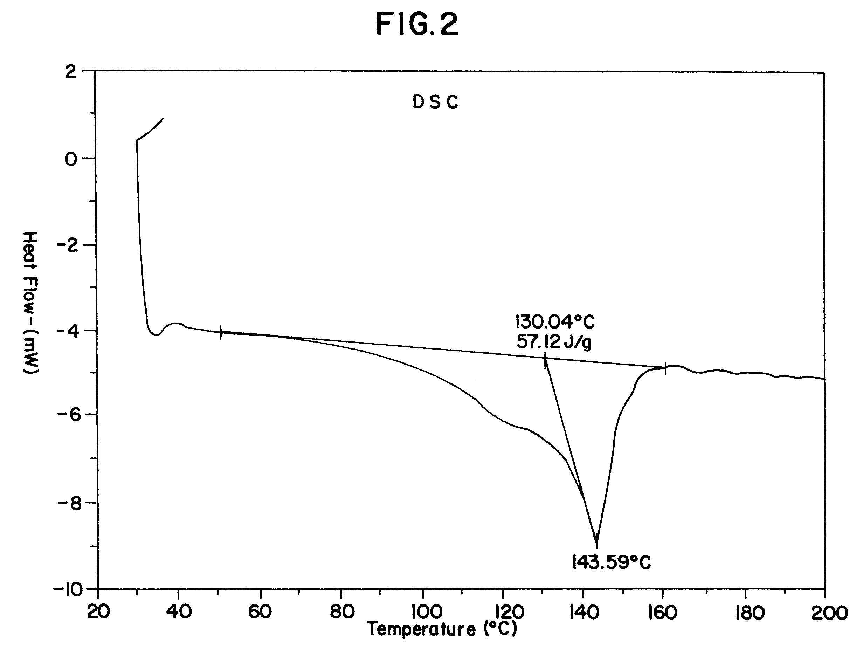

The copolymer produced was extruded and pelletized as it exited the secondary reactor. Conventional additives were incorporated during the processing. The copolymer contained 13.5 weight percent ethylene and elemental analysis of the copolymer showed it to contain 3.5 ppm Ti; 272 ppm Al; 26 ppm Cl; 77 ppm Si; 100 ppm Ca; and 71 ppm P. The copolymer had a melt flow rate of 1.0 dg/min., DSC peak melt temperature of 143.6°C and heat of fusion (DSC) of 13.67 cal/g. Figure 2 shows the DSC profile obtained for the copolymer with only one peak at 143.6°C. The secondary peak usually observed with heretofore known copolymers of this type in the range 115°C - 125°C is absent. The flexural modulus (ASTM D 790B) of the product was 51400 psi (354.390 MPa).

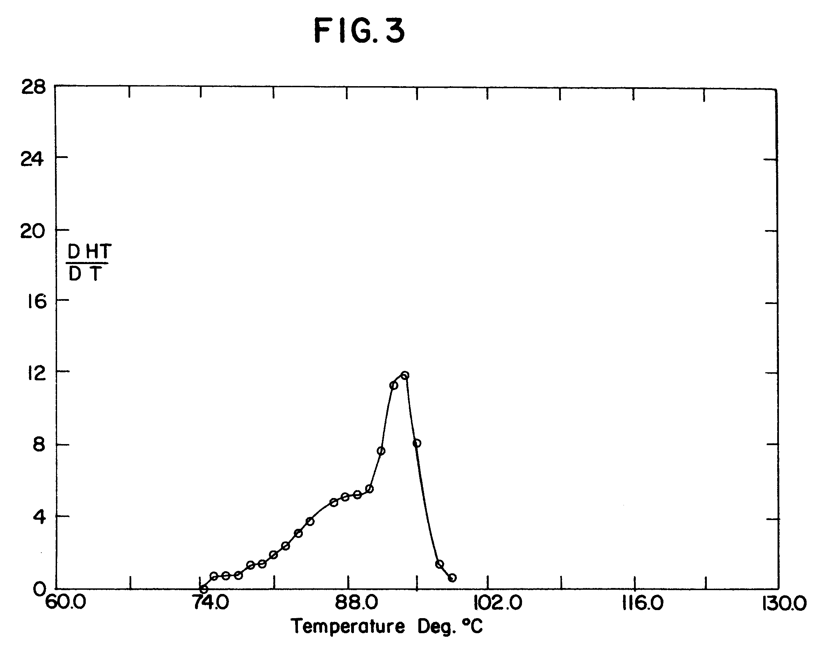

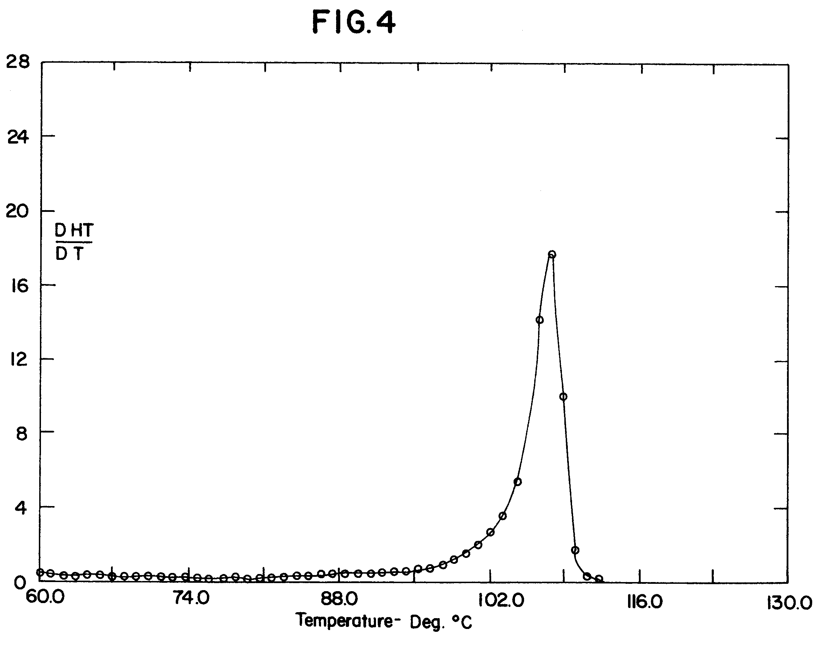

The copolymer was an intimate mixture of semi-crystalline random propylene-ethylene copolymer produced in the first reactor containing 3.5 percent ethylene and the rubber-like propylene-ethylene copolymer produced in the secondary reactor which contained 10 percent ethylene. The copolymer was fractionated using temperature rising elution fractionation (TREF), a recognized procedure for separating polymer species based on differences in crystallizability in accordance with the procedure of Wild, et al., (1992) Development of High Performance TREF for Polyolefin Analysis; Proceeding of Am. Chem. Soc., Div. of Polym. Mat. Sci. and Eng. 67:153. Figure 3 is a plot of distribution data obtained for the propylene-ethylene copolymer. For comparison, a plot of the distribution obtained for a conventional impact copolymer produced using the conventional two-reactor gas-phase process and having a comparable ethylene content is presented in Figure 4. The compositional dissimilarities of these copolymers are apparent from a comparison of the two curves.

Physical properties were determined for the propylene-ethylene copolymer produced above and were as follows:

| | |
|---|---|
| Tensile at yield (psi) | 2314 (15.95 MPa) |
| Elongation at yield (%) | 31 |
| Flexural Modulus (Mpsi) | 51.4 (354390 MPa) |
| Notched Izod, 23°C (ft-lb/in) | 14.4 N.B. (7.69 J/cm) |
| Notched Izod, -18°C (ft-lb/in) | 16.4 P (8.76 J/cm) |
| Notched Izod, -30°C (ft-lb/in) | 1.4 (0.74 J/cm) |
| Unnotched Izod, -18°C (ft-lb/in) | 34.2 N.B. (18.28 J/cm) |

Additionally, it was observed that the copolymers were resistant to bruise, i.e., stress whitening, on deformation.

It is apparent from the above data that propylene-ethylene copolymers produced in accordance with the process of the invention using a control value of 1.14 which is approximately in the middle of the defined $Q_C$ range have a useful balance of structural characteristics and physical properties. It is also apparent that the property envelope of these copolymers can be varied by selection of a different value within the range of values for $Q_C$ and by varying the ethylene feed to the polymerizations and, if necessary, other process conditions, to achieve and maintain the desired value during operation of the process. For example, to operate the system to obtain a value for $Q_A$ less than 1.14, the amount of ethylene to the first reactor would be reduced, the amount of ethylene in the second reactor would be increased or combination of the two would be used. If it was desired to increase the $Q_C$ target to a value greater than 1.14, adjustments would be made to increase the ethylene content in the primary reactor and/or decrease the amount of ethylene fed to the secondary reactor.

Copolymers produced in accordance with the present process have a desirable balance of properties but, most notably, have improved softness without adversely affecting other essential polymer characteristics. Such a balance of properties was heretofore not possible with reactor produced copolymers of propylene and ethylene. Whereas copolymers of this type, referred to as impact copolymers, have been widely produced using gas-phase multiple reactor technology, these products typically had flexural modulii between 75,000 and 230,000 psi (517.1 MPa and 1585.7 MPa). While these impact copolymers had excellent low temperature impact strength, their high flexural modulus prevented use in certain applications where products having lower stiffness were required. Furthermore, many of these high impact copolymers had a tendency to bruise or stress whiten upon impact.

With the process of this invention, copolymers of propylene and ethylene having reduced stiffness are produced. Flexural modulii from 100,000 (689.4) to as low as 20,000 (137.8) and, more preferably, from 40,000 (275.7) to 70,000 psi (482.6 MPa) are achieved. The copolymers also exhibit excellent see-through clarity and have improved resistance to bruise and stress whitening upon impact. A further advantage is that the useful copolymers are obtained directly from the reactor without the need for further processing or blending to achieve the desired stiffness/impact balance.

While it is not necessary, if desired the copolymers of the invention can be visbroken in accordance with known procedures to increase the melt flow rates of the products. This is typically accomplished by processing the copolymer at an elevated temperature in an extruder under high shear conditions and in the presence of peroxide. Peroxide levels used will generally range from 500 to 1800 ppm. In general, as the level of ethylene incorporation is increased, the amount of peroxide required to achieve a target melt flow rate must be increased. To illustrate the ability to change the melt flow rate of the copolymers without significantly affecting the other essential properties, the above-described propylene-ethylene copolymer having a melt flow rate of 1.0 was visbroken to nominal melt flow rates of 9 and 25. Properties of the two resulting visbroken products were as follows:

| Melt Flow Rate (dg/min) | 9.03 | 25.7 |
| --- | --- | --- |
| Tensile at Yield (psi) | 1923 (13.25 MPa) | 1724 (11.88 MPa) |
| Elongation at Yield (%) | 16 | 16 |
| Flexural Modulus (Mpsi) | 48.3 (330948 MPa) | 37.3 (257174 MPa) |
| Notched Izod, 23°C (ft-lb/in) | 13.4 (7.16 J/cm) N.B. | 12.5 N.B. (6.68 J/cm) |
| Notched Izod, -30°C (ft-lb/in) | 1 (0.534 J/cm) | 1.2 (0.641 J/cm) |

The copolymers of the inventions can be utilized in most applications where conventional impact copolymers are employed. They may be used by themselves or blended with other polymers. The reduced stiffness of these copolymers makes them especially useful for films, particularly in light of their resistance to tear and puncture.

## EXAMPLE 2 AND COMPARATIVE EXAMPLE A

Two mil (50.8 μm) blown film was produced using the copolymer prepared in Example 1. For comparison, film was also blown from a commercial impact copolymer having a comparable ethylene content produced using the conventional procedure of homopolymerizing propylene in a first reactor and then, in a second reactor, copolymerizing ethylene and propylene in the presence of the polypropylene from the first reactor. The commercial impact copolymer had a melt flow rate of 0.7 and flexural modulus of 115000 psi (792.8 MPa).

To produce the blown films, a small sample blown film line was employed. The line used a 1.5 inch (3.81 cm) Johnson 24:1 L/D water cooled extruder with 25 HP drive. The die used was a 4 inch (10.16 cm) diameter GEC spider design. Extrusion conditions and properties of the films produced from the copolymer and comparative resin were as follows:

| OPERATING CONDITIONS: | EXAMPLE 2 | COMPARATIVE EXAMPLE A |
|---|---|---|
| BUR | 2.2:1 | 2.2:1 |
| Lay-Flat Width (in.) | 14 (35.56 cm) | 14 (35.56 cm) |
| Temperatures (°F) | 450 (232.2°C) | 450 (232.2°C) |
| Zone 1 Barrel | 450 (232.2°C) | 450 (232.2°C) |
| Zone 2 Barrel | 450 (232.2°C) | 450 (232.2°C) |
| Zone 3 Barrel | 450 (232.2°C) | 450 (232.2°C) |
| Zone 4 Adapter | 450 (232.2°C) | 450 (232.2°C) |
| Zone 5 Block | 450 (232.2°C) | 450 (232.2°C) |
| Zone 6 Bottom Die | 450 (232.2°C) | 450 (232.2°C) |
| Zone 7 Top Die | 460 (237.7°C) | 460 (237.7°C) |
| Drive Power (Amps) | 8 | 8 |
| Volts | 145 | 200 |
| Screw RPM | 76 | 108 |
| Adapter Pressure (psi) | 4000 (27.57 MPa) | 4500 (31.02 MPa) |
| Melt Temperature (°F) | 475 (246.1°C) | 485 (251.6°C) |
| **FILM PROPERTIES:** | | |
| Yield (psi) | | |
| MD | 2280 (15.72 MPa) | 3686 (25.41 MPa) |
| TD | 2272 (15.66 MPa) | 3186 (21.96 MPa) |
| Break (psi) | | |
| MD | 6712 (46.27 MPa) | 9317 (64.23 MPa) |
| TD | 6399 (44.11 MPa) | 6122 (42.20 MPa) |
| Elongation at Yield (%) | | |
| MD | 8.9 | 13.9 |
| TD | 8.9 | 6.0 |
| Elongation at Break (%) | | |
| MD | 663 | 711 |
| TD | 678 | 667 |
| 1% Secant Modulus (Mpsi) | | |
| MD | 59 (406790 MPa) | 128 (882529 MPa) |
| TD | 53 (365422 MPa) | 118 (813581 MPa) |
| TEDD (ft-lbs) | | |
| Flat | no break | 1.55 (2.1 J) |
| Creased | no break | 1.26 (1.71 J) |
| Elmendorf Tear (g) | | |
| MD | 300 | 37 |
| TD | 460 | 132 |

The advantages of films produced using the copolymer of the invention are apparent from the above data. While the films have comparable tensile and elongation properties, the film of the invention has significantly lower modulus indicating a much softer product than the film produced from the comparative resin. Furthermore, the strength of the film of Example 1 is also much higher than that of the comparative film as evidenced by the improved TEDD results. Resistance to tear in both directions is also markedly superior with the copolymer films of the invention and the balance between the MD and TD tear values is considered to be better

## EXAMPLE 3 AND COMPARATIVE EXAMPLE B

A cast film was prepared utilizing the copolymer prepared in accordance with Example 1. An Egan extruder having a 2.5 inch (6.35 cm) diameter screw, 24:1 L/D and 22 inch (55.88 cm) die with 22 mil (558.8 $\mu$m) die gap was used. A film was also cast utilizing a conventional copolymer resin produced by homopolymerizing propylene in the first reactor and copolymerizing propylene and ethylene in the second reactor in the presence of the homopolymer from the first reactor. The ethylene content of the comparative resin was essentially identical to that of the copolymer of the invention; however, the melt flow rate was 2.1. Conditions employed for the cast film line were as follows:

| Screw Speed | 50.4 rpm |
|---|---|
| Amps | 38 |
| Line Speed | 96 fpm (0.487 ms$^{-1}$) |
| Barrel Pressure | 1170 psi (8.066 MPa) |
| Pipe Pressure | 770 psi (5.308 MPa) |
| Pipe Melt Temp | 435°F (223.8°C) |
| Adapter Melt Temp. | 470°F (243.3°C) |
| Chill Roll Temp. (#1) | 60°F (15.5°C) |
| Chill Roll Temp. (#2) | 60°F (15.5°C) |

Films produced with the copolymer of the invention and the comparative copolymer resin were evaluated and film properties were as follows:

| | EXAMPLE 3 | COMPARATIVE EXAMPLE B |
|---|---|---|
| Yield (psi) | | |
| MD | 1730 (11.92 MPa) | 2010 (13.85 MPa) |
| TD | 1470 (10.13 MPa) | 1690 (11.65 MPa) |
| Break (psi) | | |
| MD | 5290 (36.47 MPa) | 4280 (29.5 MPa) |
| TD | 3630 (25.02 MPa) | 3250 (22.4 MPa) |
| Elongation at Yield (%) | | |
| MD | 9 | 5 |
| TD | 9 | 3 |
| Elongation at Break (%) | | |
| MD | 520 | 470 |
| TD | 590 | 540 |
| 1% Secant Modulus (psi) | | |
| MD | 35600 (245.4 MPa) | 49800 (343.3 MPa) |
| TD | 27800 (191.6 MPa) | 43900 (302.6 MPa) |
| TEDD (ft-lbs) | | |
| Flat | 6.6 (8.96 J) | 1.9 (2.58 J) |
| Creased | 6.4 (8.69 J) | 1.8 (2.44 J) |
| Elmendorf Tear (g) | | |
| MD | 270 | 110 |
| TD | 860 | 460 |
| Dart Drop Impact (g) | 1204 | 541 |
| Puncture Force (N) | 30.5 | 25.1 |
| EAIT Force (lb at 23°C) | 13.4 (6.08 kg) | 10.5 (4.76 kg) |
| Deformation (in) | 2.45 (6.22 cm) | 1.94 (4.92 cm) |
| EAIT Force (lb at -18°C) | 12.0 (5.44 kg) | 8.7 (3.94 kg) |
| Deformation (in) | 0.41 (1.04 cm) | 0.54 (1.37 cm) |
| Film Thickness (mils) | | |
| Min. | 1.25 (31.75 $\mu$m) | 0.65 (16.51 $\mu$m) |
| Max. | 1.46 (37.08 $\mu$m) | 1.49 (37.84 $\mu$m) |
| Avg. | 1.35 (34.29 $\mu$m) | 1.00 (25.4 $\mu$m) |
| Std. Dev. | 0.03 | 0.27 |

It is apparent from the above data that, for cast films of comparable thickness, the tensile and elongation properties of the film of the invention and the film produced with the conventional copolymer are very similar. However, the films produced from the copolymer resin of the invention are significantly softer as evidenced by their lower modulus values. Impact strength, as determined by the TEDD, Dart Drop, EAIT tests, is also significantly higher for the films prepared with the copolymer of the invention. Much improved tear, in both directions, is achieved with the copolymer films of the invention.

## EXAMPLE 4

Preparation of Titanium Catalyst: A supported titanium-containing catalyst having the following loading was prepared:

3.0 mmole ROMgCl/lb silica (6.6 mmole ROMgCl/kg silica)
4.2 mmole $SiCl_4$/lb silica (9.25 mmole $SiCl_4$/kg silica)
0.5 mmole $Ti(OR)_4$/lb silica (1.1 mmole $Ti(OR)_4$/kg silica)
18 mmole $TiCl_4$/lb silica (39.6 mmole $TiCl_4$/kg silica)

For the catalyst preparation hexamethyldisilazane-treated silica (Crosfield EP-10) containing 4% carbon by analysis on silica was charged to a vessel and heated for 8 hours with a nitrogen purge while heating at a temperature of 138°C - 149°C. The treated silica was cooled to 26.5°C under 30 psi (0.206 MPa) $N_2$ and 2-methyl-1-pentyloxymagnesium chloride added with stirring. The mixture was heated at 90.5°C under a nitrogen purge for 2 - 3 hours and then cooled to 35°C under 15 psi (0.103 MPa) $N_2$ heptane and silicon tetrachloride solution (35 wt. % in heptane) were then added. The $SiCl_4$ was added at a controlled rate. When the addition was complete, the mixture was heated to 48.9°C to 54.4°C and maintained for 1 hour. The mixture was then cooled and the solids permitted to settle for 2 hours. The bulk of the liquid was siphoned off and fresh heptane added with stirring for 15 minutes. This mixture was permitted to settle for 2 hours and the siphoning repeated. Heptane was again added while stirring followed by the addition of titanium cresylate solution (40% in heptane) and then titanium tetrachloride. The mixture was heated and maintained at 100°C ± 12°C for 2 hours. After cooling to below 88°C, heptane was added and agitation was stopped. The reactor was cooled to below 65°C and the mixture allowed to settle for 2 hours. The liquid was siphoned off and fresh heptane added followed by stirring for 15 minutes and 1 hour settling. This procedure was repeated 4 more times. The catalyst was then dried at 99°C ± 12°C with a nitrogen purge until all the heptane was removed.

Polymerization of Propylene and Ethylene: The ability to utilize the control parameter derived from the $^{13}C$ NMR spectrum in accordance with the equation provided for $Q_C$ in a two-reactor gas-phase operation is demonstrated by the following experiment whereby propylene is polymerized in a first reactor and the product produced therein is fed to the second reactor where ethylene and propylene are copolymerized in the presence of the homopolymer. Reactor conditions and/or feed rates were selected for these runs so that the control parameter was nominally maintained within the broad range for $Q_C$ of 0.65 to 1.0.

Two conventional 800 liter gas-phase polymerization reactors, each equipped with a stirrer to maintain turbulent mechanical fluidization of the polymer powder within, were connected so that polymer from the first (primary) reactor was introduced into the second (secondary) reactor. Propylene and hydrogen were continuously metered at controlled rates to the first reactor. Titanium catalyst and two cocatalysts were independently metered. The first cocatalyst was triethylaluminum which was introduced as a 25% solution in heptane. The second cocatalyst, isobutyltrimethoxysilane, was introduced as a 15% solution in heptane. The catalyst and cocatalyst agents were fed at rates to maintain the specified triethylaluminum/silane/titanium ratio. Ethylene, propylene and hydrogen were continuously metered at controlled rates to the second reactor. An alcohol modifier was also added. No catalyst or cocatalyst was added to the second reactor.

The actual value, $Q_A$, obtained for the modified polypropylene produced under steady state conditions is indicated in Table I. Operating conditions employed in the primary and secondary reactors to achieve and maintain production of polymer having that $Q_A$ value are also provided in Table I.

TABLE I

| | RUN 1 | RUN 2 | RUN 3 |
|---|---|---|---|
| $Q_a$ | 0.80 | 0.71 | 0.64 |
| Primary Reactor: | | | |
| Alkylaluminum/silane/titanium ratio | 100/10/1 | 150/10/1 | 150/10/1 |
| Alkylaluminum Solution Feed Rate (oz/hr) | 16.2 (0.459 kg/h) | 16.2 (0.459 kg/h) | 16.6 (0.470 kg/h) |
| Propylene Feed Rate (lbs/hr) | 242.7 (110.1 kg/h) | 160.9 (73 kg/h) | 243.4 (110.5 kg/h) |
| $H_2$ Feed Rate (SCFH) | 5.44 (154 dm$^3$/h) | 4.03 (114.1 dm$^3$/h) | 5.70 (161.4 dm$^3$/h) |
| Temperature (°C) | 77 | 77 | 77 |
| Pressure (psig) | 401.6 (2.868 MPa) | 400.0 (2.857 MPa) | 402.0 (2.871 MPa) |
| Recycle (GPM) | 2.08 (7.87 dm$^3$/min) | 1.12 (4.239 dm$^3$/min) | 2.43 (9.19 dm$^3$/min) |
| Secondary Reactor: | | | |
| Propylene Feed Rate (lbs/hr) | 71.9 (32.6 kg/h) | 44.4 (20.15 kg/h) | 59.1 (26.83 kg/h) |
| Ethylene Feed Rate | 91.6 (41.58 kg/h) | 98.7 (44.8 kg/h) | 162.1 (73.59 kg/h) |
| Hydrogen Feed Rate (SCFH) | 4.96 (140.4 dm$^3$/h) | 13.83 (391.6 dm$^3$/h) | 11.19 (316.8 dm$^3$/h) |
| Alcohol Feed Rate (oz/hr) | 140.7 (3.98 kg/h) | 55.1 (1.56 kg/h) | 50.0 (1.41 kg/h) |
| Temperature (°C) | 54 | 60 | 60 |
| Pressure (psig) | 199.8 (1.4775 MPa) | 200.0 (1.4789 MPa) | 200.1 (1.4796 MPa) |
| Liquid Recycle (GPM) | 1.83 (6.92 dm$^3$/min) | 1.79 (6.77 dm$^3$/min) | 2.95 (11.16 dm$^3$/min) |
| Gas Recycle (SCFH) | 5.29 (149.7 dm$^3$/h) | 4.52 (127.9 dm$^3$/h) | 7.69 (217.75 dm$^3$/h) |

The polymer powder obtained from the second reactor was free-flowing and non-sticky. Bulk density, mean particle size and amount of fines were determined for the powders and are reported in Table II. The powders were processed in an extruder where conventional additives were incorporated into the melt and then pelletized. The modified polypropylene was analyzed and physical properties determined. Results are listed in Table II. The notation N.D. in the tables indicates that a value was not determined for the product.

TABLE II

| | PRODUCT OF | | |
|---|---|---|---|
| | RUN 1 | RUN 2 | RUN 3 |
| Bulk Density (lb/ft$^3$) | 19.1 (0.30 kg/dm$^3$) | 20.7 (0.33 kg/dm$^3$) | 20.1 (0.32 kg/dm$^3$) |
| Mean Particle Size ($\mu$M) | 1028 | 1256 | 1242 |
| % Fines < 180$\mu$M | 0.2 | 0 | 0.1 |
| % Fines < 350$\mu$M | 4.8 | 0.45 | 0.9 |
| Ethylene Content (wt. %) | 16.0 | 20.6 | 23.1 |
| Ti (ppm) | 6.9 | 4.8 | 4.0 |
| Al (ppm) | 406 | 400 | 297 |
| Cl (ppm) | 49 | 32 | 35 |
| Melt Flow Rate (pellet; dg/min) | 2.91 | 2.09 | 2.16 |
| Melt Temperature (DSC; °C) | 161.26 | N.D. | N.D. |
| Tensile Yield (psi) | 2382 (16.42 MPa) | 2084 (14.36 MPa) | N.D. |
| Elongation Yield (%) | 17.8 | 17.8 | N.D. |
| Flexural Modulus (psi) | 84200 (580.5 MPa) | 82400 (568.1 MPa) | N.D. |

## EXAMPLE 5

Another series of polymers were prepared utilizing a supported titanium-containing catalyst wherein the silica support was treated prior to contacting with the titanium moiety. For these runs the supported titanium catalyst was prepared in accordance with the procedure of Example 1 except that the catalyst loading was as follows:

5.5 mmole ROMgCl/lb silica (12.1 mmole ROMgCl/kg silica)
5.5 mmole SiCl$_4$/lb silica (12.1 mmole SiCl$_4$/kg silica)
0.6 mmole Ti(OR)$_4$/lb silica (1.32 mmole Ti(OR)$_4$/kg silica)
18 mmole TiCl$_4$/lb silica (39.6 mmole TiCl$_4$/kg silica)

For the four polymerizations, $Q_C$ was maintained within the preferred range of 0.75 - 0.98. The polymerizations were carried out following the procedure described in Example 4. The $Q_A$ value of the modified polypropylene product and reactor conditions are set out in Table III. Properties of the in-situ thermoplastic polyolefins produced are identified in Table IV.

The in-situ thermoplastic polyolefins produced in the foregoing examples are intimate mixtures of highly isotactic polypropylene produced in the first reactor and the rubber-like propylene-ethylene copolymer produced in the second reactor. By use of defined parameters to control the process conditions, it is possible to produce high ethylene content products which have desirable physical characteristics without operational problems.

The polymers produced in accordance with the process of the invention using control values in the defined $Q_C$ range have a useful balance of structural characteristics and physical properties. It is apparent that the property envelope of these copolymers can be varied by adjusting operating conditions so that the value of Q will be changed, e.g., by changing the ethylene feed to the second reactor and, if necessary, other process conditions. To operate the system so as to obtain a lower value for $Q_A$, the amount of ethylene in the second reactor would be increased. If it is desired to increase the $Q_C$ target to a higher value, adjustments would be made to decrease the amount of ethylene fed to the secondary reactor. In line process changes of this type are readily accomplished during continuous operation to bring the system into conformance with $Q_C$ target or to vary $Q_C$ within the defined limits in order to vary structural characteristics and/or physical properties of the in-situ TPO produced.

## TABLE III

| $Q_A$ | RUN 1 | RUN 2 | RUN 3 | RUN 4 |
|---|---|---|---|---|
| | 0.83 | 0.85 | 0.81 | 0.76 |
| **Primary Reactor:** | | | | |
| Alkylaluminum/silane/titanium ratio | 100/10/1 | 100/10/1 | 100/10/1 | 100/10/1 |
| Alkylaluminum Feed Rate (oz/hr) | 15(0.425 kg/h) | 12.7 (0.360 kg/h) | 16.5(0.467kg/h) | 14 (0.396 kg/h) |
| Propylene Feed Rate (lbs/hr) | 309 (140.2 kg/h) | 314.6 (142.8 kg/h) | 326.7 (148.3 kg/h) | 305.3 (138.6 kg/h) |
| $H_2$ Feed Rate (SCFH) | 3.5 (99.1 dm$^3$/h) | 2.5 (70.7 dm$^3$/h) | 3.1 (87.7 dm$^3$/h) | 2.73 (77.3 dm$^3$/h) |
| Temperature (°C) | 77 | 77 | 77 | 77 |
| Pressure (psig) | 399.3 (2.85 MPa) | 399 (2.85 MPa) | 395 (2.82 MPa) | 403 (2.87 MPa) |
| Recycle (GPM) | 3.4 (12.8 dm$^3$/min) | 4.27 (16.16 dm$^3$/min) | 3.53 (13.36 dm$^3$/min) | 3.56 (13.47 dm$^3$/min) |
| **Secondary Reactor:** | | | | |
| Propylene Feed Rate (lbs/hr) | 136.5 (61.9 kg/h) | 71.5 (32.4 kg/h) | 162.5 (73.7 kg/h) | 134.5 (61.0 kg/h) |
| Ethylene Feed Rate (lbs/hr) | 180 (81.7 kg/h) | 144.5 (65.6 kg/h) | 193 (87.6 kg/h) | 186.5 (84.6 kg/h) |
| Hydrogen Feed Rate (SCFH) | 0.3 (8.49 dm$^3$/h) | 3.4 (96.2 kg/h) | 0 | 0 |
| Alcohol Feed Rate (oz/hr) | 6.85 (0.194 kg/h) | 3.45 (0.097 kg/h) | 0 | 1.05 (0.029 kg/h) |
| Temperature (°C) | 65.5 | 65.5 | 65.5 | 65.5 |
| Pressure (psig) | 219 (1.60 MPa) | 220.5 (1.62 MPa) | 222 (1.63 MPa) | 220.5 (1.62 MPa) |
| Liquid Recycle (GPM) | 1.45 (5.48 dm$^3$/min) | 1.45 (5.48 dm$^3$/min) | 1.85 (7.00 (dm$^3$/min) | 1.75 (6.62 dm$^3$/min) |
| Gas Recycle (SCFH) | 0 | 0 | 0 | 0 |

EP 0 597 461 B1

## TABLE IV

| | PRODUCT OF | | | |
|---|---|---|---|---|
| | RUN 1 | RUN 2 | RUN 3 | RUN 4 |
| Bulk Density (lb/ft$^3$) | 22.3 (0.357 kg/dm$^3$) | 19.8 (0.317 kg/dm$^3$) | 19.9 (0.319 kg/dm$^3$) | 22.5 (0.360 kg/dm$^3$) |
| Mean Particle Size ($\mu$M) | 1236 | 1365 | 1296 | 1323 |
| % Fines < 90 $\mu$M | 0.1 | 0 | 0 | 0.1 |
| Ethylene Content (Wt. %) | 16.0 | 17.0 | 19.4 | 19.9 |
| Ti (ppm) | 2.6 | 2.3 | 2.5 | 1.7 |
| Al (ppm) | 209 | 179 | 201 | 165 |
| Cl (ppm) | 28 | 24 | 24 | 19 |
| Melt Flow Rate (pellet; dg/min) | 1.18 | 1.81 | 1.76 | 1.12 |
| Melt Temperature (DSC; °C) | 161.8 | 161.2 | 161.2 | 161.8 |
| Tensile Yield (psi) | 2181 (15.0 MPa) | 2120 (14.6 MPa) | 1910 (13.1 MPa) | 1742 (12.0 MPa) |
| Elongation Yield (%) | 34 | 27 | 27 | 34 |
| Flexural Modulus (psi) | 79300 (546.7 MPa) | 75400 (519.8 MPa) | 63500 (437.8 MPa) | 60500 (417.0 MPa) |

EP 0 597 461 B1

**Claims**

1.  A gas-phase process for producing copolymers of propylene and ethylene in multiple reactors wherein propylene is homopolymerized or copolymerized with a minor amount of ethylene in a first reactor maintained at 50°C to 100°C and 250 psig to 650 psig (1.823690 MPa to 4.581594 MPa) in the presence of a titanium catalyst and organoaluminum cocatalyst and the product produced therein is fed to a second reactor maintained at 25°C to 80°C and 100 psig to 500 psig (0.789476 MPa to 3.54738 MPa) where the resulting copolymerized product mixture is copolymerized with a minor amount of ethylene or the resulting homopolymerized product mixture is further reacted with ethylene comprising:

    (a) calculating a control parameter $Q_C$ using the integrated areas of $^{13}C$ NMR peaks corresponding to molecular structural features for copolymers of propylene and ethylene;
    (b) defining the limits of $Q_C$ for the process;
    (c) determining the actual value of the parameter, $Q_A$, for the copolymer obtained from the second reactor; and
    (d) controlling the ethylene feed to maintain $Q_A$ within the limits defined in (b).

2.  The process of Claim 1 wherein $Q_C$ is derived using eight integral regions of the $^{13}C$ NMR spectrum in accordance with the equation:

$$Q_C = \frac{A}{B}$$

    where

$$A = 1.167R_1 + 0.75R_2 + 1.5R_3 + 1.5R_4 + 1.167R_8$$

$$B = 0.667R_1 + 0.5R_2 + R_5 + R_6 + R_7 + 0.667R_8$$

    and $R_1$ through $R_8$ have the following peak assignments

    | | |
    |---|---|
    | $R_1$ | 37.9 PPM |
    | $R_2$ | 37.5 PPM |
    | $R_3$ | 33.2 PPM |
    | $R_4$ | 31.2 - 30.9 PPM |
    | $R_5$ | 30.4 PPM |
    | $R_6$ | 30.0 PPM |
    | $R_7$ | 27.4 PPM |
    | $R_8$ | 24.9 PPM |

    and the process limits for $Q_C$ will be from 0.90 to 1.35 when a minor amount of ethylene is in the first reactor or from 0.65 to 1.0 when ethylene is absent from the first reactor.

3.  The process of Claim 1 or 2 wherein one or more $\alpha$-olefins containing from 4 to 8 carbon atoms are included in the polymerization.

4.  The process of Claim 1, 2 or 3 wherein 0.5 to 12 wt. percent ethylene is present in the first reactor and 2.5 to 35 wt. percent ethylene is present in the second reactor or 0% ethylene is fed to the first reactor and an amount of ethylene sufficient to incorporate from 15 to 30 weight percent ethylene in the polymer is fed to the second reactor.

5.  The process of any of Claims 1 to 4 wherein an amount of hydrogen ranging from 0.1 to 5 mol percent is included in the first reactor and an amount of hydrogen from 1 to 10 mol percent is included in the second reactor.

6.  The process of any of Claims 1 to 5 wherein polymerization in both the first and second reactors is a gas-phase polymerization, the reactors are stirred-bed reactors and the Ti/Al catalyst is a high activity supported Ti/Al catalyst.

7.  The process of any of Claims 1 to 6 wherein no additional catalyst is added to the second reactor.

8.  The process of any of Claims 1 to 7 wherein the support used for the high activity supported Ti/Al catalyst is treated to remove surface hydroxyl groups prior to contacting with the titanium-containing compound.

9. The process of any of Claims 1 to 8 wherein the ethylene feed to the first reactor is adjusted to maintain $Q_A$ within the defined limits and/or the ethylene feed to the second reactor is adjusted to maintain $Q_A$ within the defined limits.

10. A propylene-ethylene copolymer film or sheet having a 1% secant modulus from 5,000 psi to 70,000 psi (34.4738 MPa to 482.6332 MPa) and Elmendorf tear value greater than 100 grams per mil (25.4 $\mu$m) thickness in both MD and TD directions, said copolymer containing from 3 to 47 weight percent ethylene and having a melt flow from 0.01 to 500 dg/min and melting point from 115°C to 160°C.

11. The film or sheet of claim 10 wherein the copolymer contains 8 to 40 weight percent ethylene and has a melt flow rate from 0.1 to 100 dg/min and a melting point from 125°C to 160°C.

12. The film or sheet of claim 10 or 11 wherein the copolymer is further characterized by the substantial absence of a secondary peak in the DSC profile in the range 115°C to 125°C.

13. The film or sheet of any of claims 10 to 12 having a 1% secant modulus from 15,000 psi to 65,000 psi (103.4214 MPa to 448.1594 MPa).

14. The film or sheet of any of claims 10 to 13 wherein the copolymer contains from 9 to 20 weight percent ethylene.

15. The film or sheet of claim 14 which is a blown film having an Elmendorf tear value greater than 120 grams per mil (25.4 $\mu$m) thickness in both the MD and TD directions.

16. The film or sheet of claim 15 having a 1% secant modulus from 25,000 psi to 60,000 psi (172.369 MPa to 413.6856 MPa).

17. The film or sheet of claim 16 wherein the copolymer has a melt flow rate from 0.2 to 40 dg/min and melting point from 130°C to 155 °C.

18. The film or sheet of any of claims 14 to 17 which is a cast film having an Elmendorf tear value greater than 200 grams per mil (25.4 $\mu$m) thickness in the MD direction.

**Patentansprüche**

1. Gasphasenverfahren zur Herstellung von Copolymeren von Propylen und Ethylen in mehreren Reaktoren, worin Propylen mit einer geringeren Menge Ethylen in einem ersten Reaktor, der bei 50 °C bis 100 °C und 250 psig bis 650 psig (1,823690 MPa bis 4,581594 MPa) gehalten wird, in Gegenwart eines Titan-Katalysators und eines Organoaluminium-Cokatalysators homopolymerisiert oder copolymerisiert wird und das darin hergestellte Produkt einem zweiten Reaktor zugeleitet wird, der bei 25 °C bis 80 °C und 100 psig bis 500 psig (0,789476 MPa bis 3,54738 MPa) gehalten wird, worin die resultierende copolymerisierte Produktmischung mit einer geringeren Menge Ethylen copolymerisiert wird oder die resultierende homopolymerisierte Produktmischung weiter mit Ethylen umgesetzt wird, wobei das Verfahren die Schritte umfaßt, daß man

(a) einen Steuerungsparameter $Q_C$ berechnet, indem man die integrierten Bereiche von $^{13}$C-NMR-Peaks entsprechend den molekularen Strukturmerkmalen für Copolymere von Propylen und Ethylen verwendet;

(b) die Grenzen von $Q_C$ für das Verfahren definiert;

(c) den tatsächlichen Wert des Parameters, $Q_A$, für das aus dem zweiten Reaktor erhaltene Polymer bestimmt; und

(d) den Ethylen-Zustrom steuert und so $Q_A$ innerhalb der in (b) definierten Grenzen hält.

2. Verfahren nach Anspruch 1, worin $Q_C$ unter Verwendung von acht Integral-Bereichen des $^{13}$C-NMR-Spektrums in Übereinstimmung mit der Gleichung

$$Q_C = A / B$$

abgeleitet wird, worin

$$A = 1{,}167\,R_1 + 0{,}75\,R_2 + 1{,}5\,R_3 + 1{,}5\,R_4 + 1{,}167\,R_8 \text{ ist;}$$

$$B = 0{,}667\,R_1 + 0{,}5\,R_2 + R_5 + R_6 + R_7 + 0{,}667\,R_8 \text{ ist und}$$

$R_1$ bis $R_8$ jeweils dem folgenden Peak zugeordnet sind:

| | |
|---|---|
| $R_1$ | 37,9 ppm |
| $R_2$ | 37,5 ppm |
| $R_3$ | 33,2 ppm |
| $R_4$ | 31,2 - 30,9 ppm |
| $R_5$ | 30,4 ppm |
| $R_6$ | 30,0 ppm |
| $R_7$ | 27,4 ppm |
| $R_8$ | 24,9 ppm |

und die Grenzen des Verfahrens für $Q_C$ bei 0,90 bis 1,35 liegen, wenn eine geringere Menge Ethylen in dem ersten Reaktor zugegen ist, oder bei 0,65 bis 1,0 liegen, wenn Ethylen in dem ersten Reaktor nicht zugegen ist.

3. Verfahren nach Anspruch 1 oder Anspruch 2, worin ein oder mehrere $\alpha$-Olefine, die 4 bis 8 Kohlenstoffatome enthalten, in die Polymerisation eingeschlossen werden.

4. Verfahren nach Anspruch 1, 2 oder 3, worin 0,5 bis 12 Gew.-% Ethylen in dem ersten Reaktor zugegen sind und 2,5 bis 35 Gew.-% Ethylen in dem zweiten Reaktor zugegen sind oder 0 % Ethylen dem ersten Reaktor zugeführt wird und dem zweiten Reaktor eine Menge an Ethylen zugeführt wird, die ausreichend ist, um 15 bis 30 Gew.-% Ethylen in das Polymer einzuarbeiten.

5. Verfahren nach einem der Ansprüche 1 bis 4, worin eine Wasserstoffmenge, die im Bereich von 0,1 bis 5 Mol-% liegt, in den ersten Reaktor eingeschlossen wird und eine Wasserstoffmenge von 1 bis 10 Mol-% in den zweiten Reaktor eingeschlossen wird.

6. Verfahren nach einem der Ansprüche 1 bis 5, worin die Polymerisation sowohl in dem ersten Reaktor als auch in dem zweiten Reaktor eine Gasphasen-Polymerisation ist, die Reaktoren Rührbett-Reaktoren sind und der Ti-Al-Katalysator ein auf einem Träger aufgezogener Ti-Al-Katalysator hoher Aktivität ist.

7. Verfahren nach einem der Ansprüche 1 bis 6, worin dem zweiten Reaktor kein zusätzlicher Katalysator zugesetzt wird.

8. Verfahren nach einem der Ansprüche 1 bis 7, worin der für den auf einem Träger aufgezogenen Ti-Al-Katalysator hoher Aktivität verwendete Träger vor dem In-Kontakt-Bringen mit der Titan enthaltenden Verbindung behandelt wird, um Hydroxylgruppen auf der Oberfläche zu entfernen.

9. Verfahren nach einem der Ansprüche 1 bis 8, worin der Ethylen-Zustrom zu dem ersten Reaktor so eingestellt wird, daß $Q_A$ innerhalb der definierten Grenzen gehalten wird und/oder der Ethylen-Zustrom zu dem zweiten Reaktor so eingestellt wird, daß $Q_A$ innerhalb der definierten Grenzen gehalten wird.

10. Propylen-Ethylen-Copolymer-Film oder -Platte mit einem 1%-Sekanten-Modul von 5.000 psi bis 70.000 psi (34,4738 MPa bis 482,6332 MPa) und einem Elmendorf-Reiß-Wert größer als 100 Gramm pro mil (25,4 $\mu$m) Dicke sowohl in Maschinenrichtung (MD) als auch in Richtung quer zur Maschinenrichtung (TD), wobei das Copolymer 3 bis 47 Gew.-% Ethylen enthält und einen Schmelzindex von 0,01 bis 500 dg/min sowie einen Schmelzpunkt von 115 °C bis 160 °C aufweist.

11. Film oder Platte nach Anspruch 10, worin das Copolymer 8 bis 40 Gew.-% Ethylen enthält und einen Schmelzindex von 0,1 bis 100 dg/min sowie einen Schmelzpunkt von 125 °C bis 160 °C aufweist.

12. Film oder Platte nach Anspruch 10 oder Anspruch 11, worin das Copolymer weiter gekennzeichnet ist durch die tatsächliche Abwesenheit eines zweiten Peaks im DSC-Profil im Bereich von 115 °C bis 125 °C.

13. Film oder Platte nach einem der Ansprüche 10 bis 12, welche einen 1%-Sekanten-Modul von 15.000 psi bis 65.000 psi (103,4214 MPa bis 448,1594 MPa) aufweist.

**14.** Film oder Platte nach einem der Ansprüche 10 bis 13, worin das Copolymer 9 bis 20 Gew.-% Ethylen enthält.

**15.** Film oder Platte nach Anspruch 14, welche(r) ein Blasfilm mit einem Elmendorf-Reiß-Wert größer als 120 Gramm pro mil (25,4 µm) Dicke sowohl in Maschinenrichtung (MD) als auch in Richtung quer zur Maschinenrichtung (TD) aufweist.

**16.** Film oder Platte nach Anspruch 15, welche einen 1%-Sekanten-Modul von 25.000 psi bis 60.000 psi (172,369 MPa bis 413,6856 MPa) aufweist.

**17.** Film oder Platte nach Anspruch 16, worin das Copolymer einen Schmelzindex von 0,2 bis 40 dg/min sowie einen Schmelzpunkt von 130 °C bis 155 °C aufweist.

**18.** Film oder Platte nach einem der Ansprüche 14 bis 17, welche ein Gießfilm mit einem Elmendorf-Reiß-Wert größer als 200 Gramm pro mil (25,4 µm) Dicke in Maschinenrichtung ist.

**Revendications**

**1.** Procédé en phase gazeuse pour produire des copolymères de propylène et d'éthylène dans des réacteurs multiples, dans lequel du propylène est homopolymérisé ou copolymérisé avec une faible quantité d'éthylène dans un premier réacteur maintenu à 50°C jusqu'à 100°C et à 250 psig jusqu'à 650 psig (1,823690 MPa jusqu'à 4,581594 MPa), en présence d'un catalyseur à base de titane et d'un cocatalyseur organo-aluminique et dans lequel le produit obtenu est alimenté à un second réacteur maintenu à 25°C jusqu'à 80°C et à 100 psig jusqu'à 500 psig (0,789476 MPa jusqu'à 3,54738 MPa), où le mélange de produit copolymérisé résultant est copolymérisé avec une faible quantité d'éthylène ou le mélange de produit homopolymérisé résultant est amené ensuite à réagir avec de l'éthylène, ce procédé comprenant :

(a) un calcul d'un paramètre de contrôle $Q_C$ utilisant les zones intégrées de pics de RMN $^{13}$C correspondant aux particularités structurelles moléculaires de copolymères de propylène et d'éthylène,
(b) une définition des limites de $Q_C$ pour le processus,
(c) une détermination de la valeur réelle du paramètre, $Q_A$, pour le copolymère obtenu par le second réacteur, et
(d) un contrôle de l'alimentation en éthylène pour maintenir $Q_A$ à l'intérieur des limites définies dans (b).

**2.** Procédé suivant la revendication 1, caractérisé en ce que $Q_C$ est dérivé en utilisant huit régions d'intégrale du spectre de RMN $^{13}$C conformément à l'équation :

$$Q_C = \frac{A}{B}$$

où

$$A = 1,167R_1 + 0,75R_2 + 1,5R_3 + 1,5R_4 + 1,167R_8$$

$$B = 0,667R_1 + 0,5R_2 + R_5 + R_6 + R_7 + 0,667R_8$$

et $R_1$ à $R_8$ ont les attributions de pic suivantes

| | |
|---|---|
| $R_1$ | 37,9 PPM |
| $R_2$ | 37,5 PPM |
| $R_3$ | 33,2 PPM |
| $R_4$ | 31,2 - 30,9 PPM |
| $R_5$ | 30,4 PPM |
| $R_6$ | 30,0 PPM |
| $R_7$ | 27,4 PPM |
| $R_8$ | 24,9 PPM |

et en ce que les limites du processus pour $Q_C$ sont de 0,90 à 1,35 lorsqu'une faible quantité d'éthylène est présente dans le premier réacteur, ou de 0,65 à 1,0, lorsque l'éthylène est absent du premier réacteur.

**3.** Procédé suivant l'une des revendications 1 et 2, caractérisé en ce qu'une ou plusieurs $\alpha$-oléfines contenant de 4 à 8 atomes de carbone sont incluses dans la polymérisation.

4. Procédé suivant l'une des revendications 1 à 3, caractérisé en ce que 0,5 à 12 % en poids d'éthylène sont présents dans le premier réacteur et en ce que 2,5 à 35 % en poids d'éthylène sont présents dans le second réacteur, ou en ce que 0 % d'éthylène est alimenté au premier réacteur et en ce qu'une quantité d'éthylène suffisante pour incorporer de 15 à 30 % en poids d'éthylène dans le polymère est alimentée au second réacteur.

5. Procédé suivant l'une quelconque des revendications 1 à 4, caractérisé en ce qu'une quantité d'hydrogène de l'ordre de 0,1 à 5 moles % est contenue dans le premier réacteur et en ce qu'une quantité d'hydrogène de 1 à 10 moles % est contenue dans le second réacteur.

6. Procédé suivant l'une quelconque des revendications 1 à 5, caractérisé en ce qu'une polymérisation à la fois dans les premier et deuxième réacteurs est une polymérisation en phase gazeuse, les réacteurs étant des réacteurs à lit agité et le catalyseur Ti/Al étant un catalyseur Ti/Al sur support, à haute activité.

7. Procédé suivant l'une quelconque des revendications 1 à 6, caractérisé en ce qu'aucun catalyseur supplémentaire n'est ajouté au second réacteur.

8. Procédé suivant l'une quelconque des revendications 1 à 7, caractérisé en ce que le support utilisé pour le catalyseur Ti/Al sur support, à haute activité, est traité pour éliminer des groupes hydroxyle de surface avant une mise en contact avec le composé contenant du titane.

9. Procédé suivant l'une quelconque des revendications 1 à 8, caractérisé en ce que l'alimentation en éthylène au premier réacteur est ajustée pour maintenir un $Q_A$ dans les limites définies et/ou en ce que l'alimentation en éthylène au second réacteur est ajustée pour maintenir un $Q_A$ dans les limites définies.

10. Film ou feuille de copolymère de propylène-éthylène ayant un module de sécante 1 % de 5.000 psi à 70.000 psi (34,4738 MPa à 482,6332 MPa) et une valeur de résistance à la déchirure Elmendorf plus grande que 100 g par 1/1.000 pouce (25,4 $\mu$m) d'épaisseur à la fois dans les directions MD et TD, le copolymère contenant de 3 à 47 % en poids d'éthylène et ayant un indice de fluidité de 0,01 à 500 dg/minute et un point de fusion de 115°C à 160°C.

11. Film ou feuille suivant la revendication 10, caractérisé en ce que le copolymère contient 8 à 40 % en poids d'éthylène et présente un indice de fluidité de 0,1 à 100 dg/minute et un point de fusion de 125°C à 160°C.

12. Film ou feuille suivant l'une des revendications 10 et 11, caractérisé en ce que le copolymère est en outre caractérisé par l'absence substantielle d'un pic secondaire dans le profil DSC dans la gamme de 115°C à 125°C.

13. Film ou feuille suivant l'une quelconque des revendications 10 à 12, présentant un module de sécante 1 % de 15.000 psi à 65.000 psi (103,4214 MPa à 448,1594 MPa).

14. Film ou feuille suivant l'une quelconque des revendications 10 à 13, caractérisé en ce que le copolymère contient de 9 à 20 % en poids d'éthylène.

15. Film ou feuille suivant la revendication 14, caractérisé en ce qu'il est un film soufflé présentant une valeur de résistance à la déchirure Elmendorf plus grande que 120 g par 1/1.000 pouce (25,4 $\mu$m) d'épaisseur à la fois dans les directions MD et TD.

16. Film ou feuille suivant la revendication 15, présentant un module de sécante 1 % de 25.000 psi à 60.000 psi (172,369 MPa à 413,6856 MPa).

17. Film ou feuille suivant la revendication 16, caractérisé en ce que le copolymère présente un indice de fluidité de 0,2 à 40 dg/minute et un point de fusion de 130°C à 155°C.

18. Film ou feuille suivant l'une quelconque des revendications 14 à 17, caractérisé en ce qu'il est un film coulé ayant une valeur de résistance à la déchirure Elmendorf plus grande que 200 g par 1/1.000 pouce (25,4 $\mu$m) d'épaisseur dans la direction MD.

FIG.1

# FIG.2

DSC

# FIG.3

# FIG.4

EP 0 597 461 B1